# EUROPEAN PATENT SPECIFICATION

(11) **EP 3 408 987 B1**
(45) Date of publication and mention of the grant of the patent: **06.11.2019**
(21) Application number: 16823114.0
(22) Date of filing: 15.12.2016
(51) Int. Cl.: H04L 29/06, G07C 9/00, H04W 12/08, H04L 12/28

(54) **LOCAL DEVICE AUTHENTICATION**
ÖRTLICHE VORRICHTUNGSAUTHENTIFIZIERUNG
AUTHENTIFICATION DE DISPOSITIF LOCAL

(30) Priority: 29.01.2016 US 201662288960 P
(43) Date of publication of application: 05.12.2018
(73) Proprietor: Google LLC, Mountain View, CA 94043 (US)
(72) Inventor: BIRGISSON, Arnar, Mountain View California 94043 (US); GUTNIK, Yevgeniy, Mountain View California 94043 (US); ZHU, Bo, Mountain View California 94043 (US); BUKA, Vitaly, Mountain View California 94043 (US); EDERLE, Jason Reid, Mountain View California 94043 (US); SEMENOV, Alexey, Mountain View California 94043 (US); JACOBY, Mackenzie Lee, Mountain View California 94043 (US); GUPTA, Vikas, Mountain View California 94043 (US)
(74) Representative: Hewett, Jonathan Michael Richard
(86) International application number: PCT/US2016/066896
(87) International publication number: WO 2017/131887

(56) References cited:
- WO-A1-2015/002581
- US-A1- 2015 143 471
- ARNAR BIRGISSON ET AL: "Macaroons: Cookies with Contextual Caveats for Decentralized Authorization in the Cloud", PROCEEDINGS 2014 NETWORK AND DISTRIBUTED SYSTEM SECURITY SYMPOSIUM, 23 February 2014 (2014-02-23), - 26 February 2014 (2014-02-26), XP055347395, Reston, VA DOI: 10.14722/ndss.2014.23212 ISBN: 978-1-891562-35-8

## Description

### FIELD

This specification describes technologies related to wireless communications across low-power networks.

### BACKGROUND

Low-power devices, such as smart locks, smart appliances (e.g., washers, stoves, refrigerators, etc.), smart thermostats, and other devices capable of remote control, sensing, and operation, are increasing common and integrated into daily life. Due to limited processing ability of these devices, and bandwidth limitations imposed on data transfer by the low-power networks on which they operate (e.g., such as Bluetooth™ low energy (BLE) networks), many common low-power devices may be unable to implement conventional access-control processes.
United States patent application US 2015/ 143471 describes a method for establishing a resource access authorisation in M2M communication.
International patent application WO 2015/002581 describes a method and a constrained resource device for establishing a secret first key between a client device and the constrained resource device.

"Macaroons: Cookies with Contextual Caveats for Decentralized Authorization in the Cloud", Birgisson et al, Proceedings 2014 Network and Distributed System Security Symposium discloses flexible authorisation credentials for Cloud services.

### SUMMARY

The invention is defined by the appended independent claims. Preferred embodiments are set out in the dependent claims.

The disclosed embodiments relate to computerized processes that enable low-power device, such as smart locks, smart appliances (e.g., washers, stoves, refrigerators, etc.), smart thermostats, and other devices capable of remote operation and control, to delegate access-control decisions to one or more additional devices, such as computing systems that maintain cloud networks. Through the disclosed embodiments, a low-power device (e.g., a resource device) may generate and locally store one or more master tokens, such as a master device token that enables other devices to verify an identify of the low-power device, and a master access token that establishes an ability of other devices to access the low-power device. The resource device may, for example, delegate its access-control decisions to one of the computing systems by transmitting its master token(s) to the computing system. The computing system may store the received master tokens and maintain, on behalf of the resource device, an access control list identifying devices authorized to access the resource device and various restrictions and limitations imposed on the authorized access by an owner of the resource device.

Upon receipt of a request from a client device to access the resource device, the computing system may, in some aspects, establish not only that the owner granted the client device limited access to the resource device, but also that the requested access is consistent with the various restrictions and limitations imposed by the owner of the resource device. To facilitate the granted limited access, the computer system may generate or "mint" a local device token based on the master device token, and a local access token based on the master access token. The local device token may enable the client device to establish a secure directed connection with the resource device, e.g. over a direct device-to-device wireless connection such as a low-power BLE network, and the local access token may be a "short-lived" token specifying the various imposed restrictions and limitations. The client device may present these local tokens to the resource device over the low-power network, and may negotiate access in accordance with the imposed restrictions and limitations without communication with the computing device or network access.

In one general aspect, a computer-implemented method includes: obtaining, by one or more processors of an apparatus, a master access token for a resource device; identifying, by the one or more processors, a user associated with a client device; and determining, by the one or more processors, that the user has been authorized to receive limited access to the resource device. In response to the determination, the method may generate, by the one or more processors, a local access token based on the master device token. In some aspects, the local access token may be configured to grant access to the resource device without requiring the resource device to have network connectivity. The method also include providing, by the one or more processors, the local access token for the resource device to the client device. The resource device may be a low-power resource device.

In some implementations, the disclosed methods may include determining, that the user has been authorized to receive the limited access to the resource device by at least one of an owner of the resource device or an entity capable of controlling access to the resource device.

In some implementations, the disclosed methods may include receiving, from the client device, a request to obtain the limited access for the resource device, and in response to the request, providing the local access token for the resource device to the client device. In certain aspects, the request may include at least one of an identifier of the user or an identifier of the client device. The local access token for the resource device can be provided to the client device in response to the request.

In some implementations, the disclosed methods may include identifying the client device based on at least a portion of the received request, determining that the client device has been authorized to receive the limited access to the resource device, and generating the local access token in response to the determination that the client device has been authorized to receive the limited access.

In some implementations, the disclosed methods may include obtaining an access control list for the resource device. In some aspects, the access control list may identify one or more users authorized to receive corresponding limited accesses to the resource device.

In some implementations, the apparatus is configured to store the access control list in local memory.

In some implementations, the disclosed methods may include determining, based on the access control list, that the one or more authorized users include the user, and establishing that the user of the client device has been authorized to receive the limited access in response to the determination that the one or more authorized users include the user.

In some implementations, the disclosed methods may include receiving access control data from an owner device associated with an owner of the resource device, and modifying at least a portion of the access control list to identify the user of the client device as an authorized user. In some aspects, the access control data may authorize the user to receive the limited access to the resource device.

In some implementations, the access control data may include access parameters, and the access parameters may establish a scope of the limited access granted to the user. The disclosed methods may also include modifying at least a portion of the access control list to include the access parameters.

In some implementations, the access parameters may include at least one of a role assigned to the user, a temporal restriction, a restriction on an access type, a restriction on offline access, or a restriction on an ability of the client device to generate tokens, and the access control list may identify the one or more access parameters associated with the user.

In some implementations, the local access token may include a macaroon comprising one or more caveats and a corresponding key, the disclosed methods may, based on the access control list, identify the access parameters associated with the user, establish an expiration time for the local access token, and performing operations that incorporate the expiration time and the identified access parameters within the one or more caveats of the local access token.

In some implementations, the disclosed methods may include modifying at least a portion of the access control list to incorporate the expiration time established for the local access token of the user.

In some implementations, the local access token may include data identifying at least one of the user or the client device, and the disclosed method may include applying a digital signature to the local access token.

In some implementations, the local access token may, for example, include a macaroon that includes one or more caveats and a corresponding key, the corresponding key may include the applied digital signature, and the disclosed method may include generating the digital signature based on an application of a MAC algorithm to at least a portion of the one or more caveats.

In some implementations, the one or more caveats may include at least one of an expiration date of the token, a role assigned to the user, or the data identifying the at least one of the user or the client device.

In some implementations, the local access token may include a digital certificate.

In some implementations, the disclosed methods may include receiving a master access token from the resource device, and generating the local access token based on at least a portion of a master access token.

In some implementations, the master client token may, for instance, include a first macaroon having one or more first caveats and a corresponding first key, the local access token may include a second macaroon that includes one or more second caveats and a corresponding second key.

In some implementations, the second caveats may include the first caveats, an expiration date of the local access token, and one or more access parameters associated with the limited access of the user, which may include at least one of a role assigned to the user, a temporal restriction, a restriction on an access type, a restriction on offline access, or a restriction on an ability of the client device to generate tokens.

In some implementations, the disclosed methods may include receiving, from the resource device, a master device token enabling the client device to verify an identity of the resource device, in response to the determination, generating a local device token based on at least a portion of the master device token, and providing the local device token to the client device.

In another general aspect, a computer-implemented method includes: establishing, by one or more processors of a resource device, a secure wireless connection with a client device; receiving, by the one or more processors, token data derived from access token from the client device and a request for access to the resource device by the client device; determining, by the one or more processors, and without communicating over a network, that the received token data is derived from a valid token that authorizes access to the resource device; and determining, by the one or more processors, and without communicating over the network, that the access token authorizes a level of access that is sufficient to provide the access requested by the client device. In response to determining that the received token data is derived from a valid token and determining that the access token authorizes a level of access that is sufficient to provide the access requested by the electronic device, the method may also include providing, by the one or more processors, the access to the resource device requested by the client device.

In some implementations, the secure wireless connection may include a direct wireless connection between the client device and the resource device.

In some implementations, the direct wireless connection may include a Bluetooth Low Energy (BLE) connection.

In some implementations, the disclosed methods may also include receiving, from the client device, caveat data and random data, the caveat data being extracted by the client device from a local device token, computing a key value based on at least a portion of the received caveat and random data, transmitting the computed key value to the client device, and establishing the secure wireless connection with the client device based on a correspondence between the computed key value and an additional key value computed by the client device based on the local device token.

In some implementations, the disclosed methods may include establishing the computed key value as a session key.

In some implementations, the caveat data and random data may be encrypted using a shared symmetric key, and the disclosed methods include decrypting the received caveat data and random data, encrypting the computed key value using the shared symmetric key, and transmitting the encrypted key value to the client device.

In some implementations, the resource device may delegate access control decisions to at least one of a computer system associated with a cloud server, a third party authentication service, or a device of an owner of the resource device, and the at least one computer system, third party authentication service, or owner device generated the access token and provided the access token to the client device.

In some implementations, the disclosed methods may include performing the establishing, receiving, and providing steps without communicating over the network.

In some implementations, the access token comprises a macaroon having one or more caveats and a corresponding key.

In some implementations, the step of determining that the received token data is a derived from valid token without communicating over a network may also include extracting the one or more caveats from the received token data, computing a copy of the received token data based on the extracted caveats and a master access token maintained by the resource device, determining that the received token data corresponds to the computed copy, and establishing that the received token data is derived from a valid token when the received token data corresponds to the computed copy.

In some implementations, the step of determining that the received token data is derived from a valid token without communicating over a network further may include identifying a chain of access for the received access token based on at least a portion of the extract caveats, and verifying the chain of access for the received token.

In some implementations, the one or more caveats mat include an expiration date of the access token, a role assigned to the client device by an owner of the resource device, and one or more access parameters, the access parameters, the access parameters comprise at least one of a temporal restriction, a restriction on an access type, a restriction on offline access, or a restriction on an ability of the client device to generate tokens, and the request for access to the resource device identifies one or more requested functions of the resource device.

In some implementations, the step of determining that the access token authorizes the sufficient level of access may include determining, based on the expiration date, that the access token has not expired, identifying a role required by the client device to access the requested functions of the resource device, determining that the required role is consistent with the assigned role, determining that the one or more requested functions are consistent with the one or more access parameters, and in response to the determinations that (i) that the access token has not expired, (ii) the required role is consistent with the assigned role, and (iii) one or more requested functions are consistent with the one or more access parameters, establishing that the access token authorizes a level of access that is sufficient to provide the requested access.

In some implementations, the resource device has delegated access control decisions to at least one of a computer system associated with a cloud server, a third party authentication service, or a device of an owner of the resource device; and the at least one computer system, third party authentication service, or owner device generated the access token and provided the access token to the client device.

In other embodiments, corresponding systems, devices, and computer programs, may be configured to perform the actions of the methods, encoded on computer storage devices. A device having one or more processors may be so configured by virtue of software, firmware, hardware, or a combination of them installed on the device that in operation cause the device to perform the actions. One or more computer programs can be so configured by virtue of having instructions that, when executed by device, cause the device to perform the actions.

Implementations of the technology disclosed herein may provide one or more of the following advantages. A device may delegate access control decisions to a remote system. This allows sophisticated security and access control for a device while reducing power demands, processing demands, and network bandwidth demands on the device. The system can allow a fine-grained access control that permits specific permissions or restrictions to be granted. In addition, the system can allow authorized users to delegate limited access to others, subject to various conditions or restrictions. In addition, even though a remote system makes decisions to grant authorization to users or devices, the security scheme is arranged so that communication between the remote system and the secured device is not required. That is, when access is requested, the secured device can determine whether a requester is authorized without subsequently communicating with the remote system. In this manner, the authentication scheme is effective even in the absence of a network connection. The ability to perform authentication without a network connection can also reduce power demands, which is particularly advantageous for small or battery-powered devices.

The details of one or more embodiments of the subject matter described in this specification are set forth in the accompanying drawings and the description below. Other potential features, aspects, and advantages of the subject matter will become apparent from the description, the drawings, and the claims.

### BRIEF DESCRIPTION OF THE DRAWINGS

FIG. 1 is a diagram of an exemplary computing system.
FIG. 2 is a diagram illustrating an exemplary exchange of data facilitating a delegation of access-control decisions between devices.
FIG. 3 is a flowchart of exemplary processes for delegating access control decisions from a resource device to one or more computing devices.
FIG. 4 is a diagram illustrating an exemplary exchange of data facilitates a token-based access of a resource device by a client device.
FIG. 5 is a flowchart of exemplary processes for granting access to a resource device.
FIG. 6 is a block diagram of computing devices that can be used to implement the systems and methods described in this document.

Like reference numbers and designations in the various drawings indicate like elements.

### DETAILED DESCRIPTION

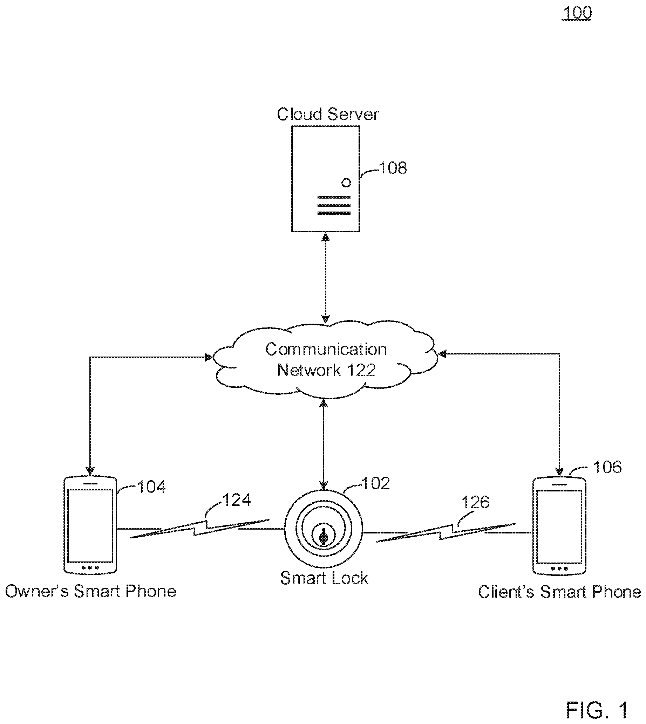

FIG. 1 illustrates an exemplary system 100 for delegating access-control decisions from a resource device to one or more other devices and/or computer systems, and for providing device-specific tokens that grant access to the resource device without requiring network access. For example, system 100 may include a resource device 102, an owner device 104, a client device 106, a computing system 108, and a communications network 122 capable of interconnecting one or more of the components of system 100.

Further, in certain aspects, system 100 may also include one or more local wireless communications networks (e.g., wireless peer-to-peer connections, etc.) capable of directly connecting one or more components of system 100. For example, in FIG. 1, system 100 may include a local wireless communication network 124, which directly connects resource device 102 and owner device 104, and additionally or alternatively, a local wireless communication network 126, which directly connects resource device 102 and client device 106. The disclosed embodiments are, however, not limited to these exemplary local wireless communications networks, and in other aspects, system 100 may include any additional or alternate number of local wireless communications networks appropriate to the components of system 100.

In general, a resource device 102 can generate or maintain some a secret, e.g., a root key, that is only known to the resource device 102. The resource device 102 generates a master key or master token, which is derived from the root key. The resource device 102 then sends the master token to a trusted authority to delegate access management rights to the trusted authority. In some implementations, the trusted authority is a remote server system accessible through the Internet, such as computing system 108. After delegation is complete, the trusted authority will be able to produce any number of access keys or access tokens for accessing the resource device 102, without contacting the resource device 102. The resource device 102 may even be turned off or offline at the time new access tokens are generated.

Later, when another party requests access to the resource device 102, the requesting party presents an access token obtained from the trusted authority. From the access token, the resource device 102 will be able to verify that (i) the access token was derived from the device root key, and (ii) the access token was issued by the proper access management authority. In addition, the resource device 102 will be able to determine the access rights, privileges, and restrictions that have been granted to the presenter of the access token. This allows the resource device 102 to determine whether to provide access, and what scope of access to provide, based on the access token and without communicating with the trusted authority that has been delegated access management rights.

Resource device 102 may, in some aspects, include a low-power device (e.g., operated by a low-power microcontroller unit (MCU) and/or a system-on-chip (SoC)), which may be configured to establish communications with components of system 100 across communications network 122 and additionally or alternatively, to establish direct connections across local wireless communications networks 124 and 126. For example, the low-power device may be a battery-powered device or one that is otherwise power-constrained. By way of example, resource device 122 may include, but is not limited to, a set of wireless speakers, a wireless printer or other electronic device, a smart lock, a smart appliance (e.g., a refrigerator, stove, and/or washer), a smart thermostat or other sensor, and any additional or alternate device (e.g., an Internet-of-Things (IOT) connected device) capable of establishing, among other things, communications with computing system 108 across network 122, direct communications with owner device 104 across local wireless communication network 124, and additionally or alternatively, direct communications with client device 106 across local wireless communication network 126. In some implementations, resource device 102 may function as a "server" device according to the Weave or µWeave protocols.

Owner device 104 and client device 106 may include, but are not limited to, a mobile telephone, a smart phone, a tablet computer, a desktop computer, laptop computer, a tablet computer, a wearable computer, a music player, an e-book reader, a navigation system, or any other appropriate computing device capable establishing communications with components of system 100 across communications network 122, local wireless communications network 124, and/or local wireless communications network 126. Additionally, computing system 108 may include one or more computer systems configured to execute software instructions stored in memory performing one or more processes consistent with the disclosed embodiments and to communication with one or more components of system 100 across network 122.

Further, in certain aspects, local networks 124 and/or 126 may include a wireless personal area network (PAN), such as a Bluetooth™ low energy (BLE) network. In other aspects, and consistent with the disclosed embodiments, network 122, and additionally or alternatively, one or more of local networks 124 and 126, may include, but are not limited to, a wireless local area network (LAN), e.g., a "Wi-Fi" network, a RF network, a Near Field Communication (NFC) network, a wireless Metropolitan Area Network (MAN) connecting multiple wireless LANs, and a wide area network (WAN), e.g., the Internet.

In some embodiments, the components of system 100 may implement access-control protocols that grant access-control privileges to client device 106 and that enable client device 106 to access resource device 102 in accordance with the granted access control privileges. By way of example, conventional access-control processes may require an accessible device (e.g., resource device 102) to maintain an access control list (e.g., an ACL) identifying one or more authorized devices (e.g., client device 106) and a level of access provided to these authorized devices. Upon receipt of an access request from a device, the accessible device may parse the ACL to determine whether the requesting device is an authorized device, and if so, to determine a level and/or type of access afforded to the requesting device.

As described above, however, resource device 102 may include devices operated by low-power MCUs and SoCs. These low-power MCUs and/or SoCs operate at relatively low clock speeds and include limited local memory, which may render them incapable of maintaining ACLs for multiple authorized device and performing access-control protocols at speeds sufficient to process and authenticate individual requests (e.g., from client device 106 or from other client devices in system 100). In view of the limitations imposed by the low-power MCUs and/or SoCs, access-control protocols consistent with the disclosed embodiments may delegate access-control decisions from resource device 102 to another component of system 100, which may identify devices authorized to access resource device 102), and which may generate or "mint" local tokens that, upon presentation to resource device 102, enable the authorized device to access functions of resource device 102.

By way of example, resource device 102, owner device 104, and client device 106 may each be capable of establishing communications with computing system 108 across network 122, and access-control protocols consistent with the disclosed embodiments may enable resource device 102 to delegate access-control decisions to computing system 108. In some aspects, described herein, computing system 108 may function as a cloud server (e.g., a server maintained by Google Cloud™), and may generate and maintain ACLs on behalf of resource device 102 based input received from owner device 104 (and additionally or alternatively, any other device of an entity that controls or manages access to resource device 102). Further, and as described below, computing system 108 may generate or mint local tokens that enable an authorized device (e.g., client device 106) to verify an identity of resource device 102 and that specify a level, type, and duration of client device 106's access to resource device 102.

In certain aspects, and to initiate access-control protocols that delegate resource device 102's access-control decisions to computing system 108, owner device 104 (e.g., maintained by an entity that owns or controls access to resource device 102) may perform one or more processes that discover resource device 102 across network 124. For example, resource device 112 may be discoverable to devices operating across network 124, and may broadcast advertisement data indicative of its discoverable state to devices operating across network 124. In one instance, resource device 102 may be publicly discoverable, and the broadcast advertisement data may include a device identifier of resource device 102 (e.g., a media access control (MAC) address, an IP address, etc.). Upon receipt of the device identifier by owner device 104, owner device 104 may discover and pair with resource device 102, and may establish a direct wireless connection with resource device 102 (e.g., across network 124).

In other instances, resource device 122 may be privately discoverable, and may include ephemeral identifier (EID) data within the advertisement data to indicate its membership in one or more private networks operating within system 100. For example, and when privately discoverable, resource device 102 may broadcast advertisement data that includes a random number of specified length (e.g., a 16-bit random number) and a digital signature of that random number generated using a private cryptographic key shared among members of the one or more private networks. In some aspects, resource device 102 may generate the digital signature by applying a message authentication code (MAC) algorithm (e.g., a HMAC-SHA256 algorithm with a tag length of sixteen bytes) to the random number and the shared private cryptographic key. Owner device 104 may receive the advertisement data, generate an additional digital signature of the random number using the shared private cryptographic key, discover resource device 102 when the received and generated digital signatures match, and establish the direct wireless connection with resource device 102 across network 124.

Upon successful discovery and pairing, owner device 104 may perform one or more processes (e.g., "bootstrapping" processes) to register resource device 102 with computing system 108 and implement access-control processes consistent with the disclosed embodiments. By way of example, owner device 104 may establish communications with computing system 108 across network 122, and may provide one or more authentication credentials to computing system 108 (e.g., logins associated with cloud-service accounts, passwords, biometric data, tokens, digital certificates, etc.). Computing system 108 may, in some aspects, compare the received authentication credentials against stored cloud-service account data (e.g., data indicative of users having accounts with the cloud service, such Google Cloud™, or users having GAIA™ accounts) to authenticate a user of owner device 104 (e.g., the owner of owner device 104 and/or the entity controlling access to owner device 104).

Upon successful authentication, owner device 104 may generate and present to a user a registration template via a graphical user interface (e.g., via an executed mobile application and/or a web page associated with the cloud service). The registration template may, in some aspects, indicate an intent of the user to register resource device 102 for one or more access-control processes consistent with the disclosed embodiments. Further, and by way of example, owner device 104 may receive registration data input by the user into the presented registration template, which may include, but is not limited to, data identifying resource device 102, owner device 104, and/or the user's account with the cloud service, and owner device 104 may transmit the registration data across network 122 to computing system 108 using one or more secure communications protocols (e.g., secure hypertext transfer protocols (HTTPS), etc.).

Computing system 108 may process the received registration data and generate a unique registration ticket identifier linked to owner device 104, a cloud-service account of the user (e.g., the user's GAIA™ account, the user's account with Google Cloud™), and to resource device 102. Computing system 108 may, in some instances, store the generated registration ticket identifier in a local memory or data repository, and may transmit the generated registration ticket identifier to owner device 104 across network 122 using one or more secure communications protocols (e.g., secure hypertext transfer protocols (HTTPS), etc.).

Owner device 104 may receive the registration ticket identifier from computing system 108, and in some aspects, may encrypt the registration ticket identifier using the shared private cryptographic key and transmit the encrypted registration ticket identifier to resource device 102 across network 124. Resource device 102 may receive and decrypt the encrypted registration ticket identifier, which may be stored in a local memory or data repository. Further, in certain aspects, resource device 102 may provide the registration ticket identifier to computing system 108 (e.g., through a call to an appropriate application programming interface (API), such as a Privet API consistent with the Weave protocols) to complete the registration process.

Computing system 108 may receive the registration ticket identifier through the API, and based on the registration ticket identifier, may identify owner device 104 and the cloud-service account. In response to the determination, computing system 108 may generate one or more authentication credentials for resource device 102, and may generate and locally store one or more access control lists (e.g., ACLs) for resource device 102. As described below, the generated and stored ACLs may identify, among other things, devices authorized to access resource device 102 and one or more access parameters that define, limit, and/or restrict a scope of the authorized access. Computing system 108 may transmit the generated authentication credentials to resource device 102 across network 122 using any of the secure communications protocols described above. Resource device 102 may receive and store the issued authentication credentials in a local memory or data repository, and in some aspects, computing system 108 may establish secure communication sessions with resource device 102 based on the issued authentication credentials.

Upon successful registration, resource device 102, owner device 104, client device 106, and computing system 108 may collectively perform operations that implement one or more access-control protocols consistent with the disclosed embodiments. For example, the disclosed processes may enable resource device 102 to delegate access control decisions to computing system 108 (e.g., a cloud server, such as a server maintained by Google Cloud™), which may generate one or more tokens that provide client device 106 with access to resource device 102 in accordance with one or more limitations and/or restrictions imposed by owner device 104.

To implement these and other access-control processes, resource device 102, owner device 104, client device 106, and/or computing system 108 may be configured to generate, receive, and/or store one or more cryptographic keys and tokens. For example, during the discovery processes described herein, resource device 102 may generate a root cryptographic key, which resource device 102 may store in a local memory or data repository, and which may be held confidential by resource device 102.

Additionally, in certain aspects, resource device 102, owner device 104, and/or client device 106 may store local copies of a shared private cryptographic key, which may encrypt communications between resource device and owner device 104 across network 124 (and also with client device 106 across network 126) during an initial handshake process to obscure any device-specific information from a passive listener. In certain aspects, the shared private cryptographic key may be generated by resource device 102 using the stored root cryptographic key, and resource device 102 may provide the shared private cryptographic key to owner device 104 and/or client device 106 across respective ones of networks 124 and 126. In other aspects, resource device 112 may provide the shared private cryptographic key to an additional device (e.g., a device held by an owner of resource device 112) and/or to computing system 108 (e.g., a cloud server, such as a server maintained by Google Cloud™) during an initial registration and/or bootstrapping process. The additional device and/or computing system 108 may then provide the shared private cryptographic key to client device 106 as a portion of one or more local access tokens, such as those described below.

Device and access tokens consistent with the disclosed embodiments may be formatted as macaroons, which include a sequence of byte-strings (e.g., caveats) and an authentication tag (e.g., a digital signature) computed recursively by applying a message authentication code (MAC) algorithm to each caveat in a nested fashion. As described below, the caveats may include, but are not limited to, device identifiers, identifiers of device-specific cryptographic keys, and/or access restrictions (e.g., expiration dates, temporal restrictions, privilege levels, restrictions on re-sharing, session-based restrictions, temporal restrictions, etc.). Further, in additional aspects described below, a previously generated macaroon may be extended (e.g., by resource device 102, owner device 104, computing system 108, etc.) by adding additional caveats and by recursively applying the MAC algorithm to the additional caveats using the previous tag as the key. MAC algorithms consistent with the disclosed embodiments may include, but are not limited to, an HMAC-SHA256 algorithm with a tag length of sixteen bytes and other algorithms appropriate with the client device 106 and resource device 112.

For example, resource device 102 may generate a master device token and a master access token that, as described above, may be formatted as macaroons. The caveats of the master device token may include, but are not limited to, an identifier of resource device 102 (e.g., a MAC address, etc.) and random data (e.g., a random nonce) generated by resource device 102. In additional instances, the caveats of the master access token may include, among other things, a role or privilege level associated with the owner of resource device 102 (e.g., a highest available privilege) and the random nonce. Resource device 102 may also generate digital signatures for the master device and access tokens based on, for example, the stored root cryptographic key and respective caveats of the master device and access tokens (e.g., using an appropriate MAC algorithm). The generated digital signatures (e.g., which may serve as authentication tags for corresponding ones of the macaroons) may, in some instances, reduce a likelihood that a malicious party could intercept and modify one or more of the tokens during transmission between resource device 102 and other components of system 100.

As described above, access-control protocols consistent with the disclosed embodiments may enable resource device 102 to delegate its access-control decisions to computing system 108 (e.g., a cloud server, such as a server maintained by Google Cloud™), which may provide access privileges to one or more additional devices (e.g., client device 106) in accordance with limitations and restrictions imposed by owner device 104. To facilitate this delegation, resource device 102 may transmit the master device and access tokens to computing system 108 across network 122 (e.g., using any of the secure communications protocols outlined above).

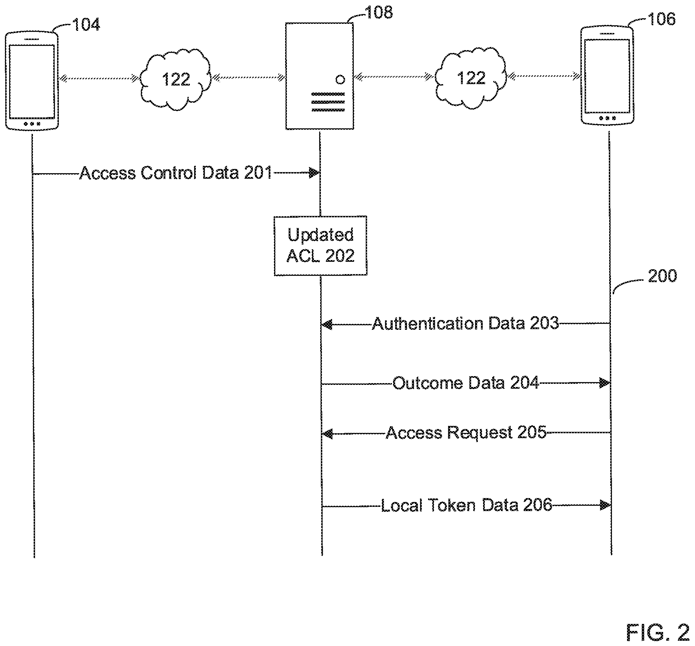

Computing system 108 may, in some aspects, receive the master device and access tokens from resource device 102, may associate the master device and access tokens with owner device 104 (and additionally or alternatively, with a cloud service account of the user of owner device 104), and may store the master device and access tokens in a local memory or data repository. In certain aspects, and as described in reference to FIG. 2, computing system 108 may generate local device and access tokens that grant client device 106 access to one or more functions of resource device 102 in accordance with limitations and/or restrictions imposed on that access by owner device 104.

FIG. 2 is a schematic diagram illustrating an exemplary exchange of data 200 that facilitates a delegation of access-control decisions from resource device 102 to computing system 108, in accordance with disclosed embodiments. By way of example, and using any of the exemplary techniques described above, resource device 102 may generate master device and access tokens, which may be formatted as macaroons, and which may be transmitted from resource device 102 to computing system 108. The disclosed embodiments are, however, not limited to master device and access tokens generated by resource device 102, and in other aspects, master device and access tokens consistent with the disclosed embodiments may be generated by owner device 104, another device associated with an entity that controls resource device 102 (not depicted in FIG. 1), and further, any additional or alternate device operable within system 100 and appropriate to the delegated access.

In some aspects, as described above, computing system 108 may generate and maintain an access control list (e.g., an ACL) that identifies one or more devices authorized to access resource device 102 and further, one or more access parameters defining, limiting, and/or restricting a scope of the authorized access. In certain aspects, the access parameters may include, but are not limited to, an expiration date, session-based restrictions (e.g., limiting the delegated access to a single, established communications setting), temporal restrictions (e.g., period of validity, valid dates and times, etc.), restrictions on types of authorized access (e.g., use of functions, modification of settings, etc.), roles associated with the authorized devices (e.g., owner, manager, user, etc.), an ability of the authorized devices to further delegate access (e.g., to mint additional tokens), and/or an ability of the authorized devices to access resource device 102 off-line (e.g., without access to network 122). The disclosed embodiments are, however, not limited to these exemplary access parameters, and in further aspects, ACLs consistent with the disclosed embodiments may include any additional or alternate access parameters appropriate to computing system 108, resource device 102, and the authorized devices (e.g., client device 106). Further, one or more of the access parameters may be established by owner device 104 (e.g., based on input received from a corresponding user), and additionally or alternatively, may represent default parameters established by computing system 108 based on properties of resource device 102 and/or the authorized devices (e.g., client device 106).

In an embodiment, a user of owner device 104 may access a graphical user interface (GUI) associated with computing system 108 (e.g., as generated by a mobile application executed by owner device 104 and/or a web page accessed and rendered for presentation by owner device 104). In some aspects, the presented GUI may identify one or more devices authorized to access resource device 102 (e.g., within the one or more ACLs), may identify the one or more access parameters for each of the authorized devices, and further, may enable the user add an additional authorized device to the ACL and specify access parameters for the additional authorized device.

For example, and as input to the GUI presented by owner device 104, the user may provide information (i) identifying client device 106 as a device authorized to access resource device 102 and (ii) specifying one or more of the access parameters that define, limit, and/or restrict a scope of client device 106's authorized access. In some instances, the information identifying client device 106 may include a device identifier and/or an identifier of a user that operates client device 106. Further, and as described above, the information may specify access parameters that include, but are not limited to, expiration dates, session-based restrictions, temporal restrictions, types of authorized access, roles, restrictions on subsequent delegation, and restrictions on off-line access imposed by owner device 104. In some instances, and consistent with the disclosed embodiments, the specified role must be equivalent to, or lower than, a comparable role associated with owner device 104.

As illustrated in FIG. 2, owner device 104 may receive and package the information input by the user into access control data 201, which may be transmitted across network 122 to computing system 108 using any of the secure communications protocols outlined above. In certain aspects, access control data 201 may also include one or more authentication credentials (e.g., a user name of a cloud-service account of the user, a password, biometric data, etc.) that enable computing system 108 to authenticate owner device 104 and/or the user of owner device 104.

Computing system 108 may receive access control data 201 from owner device 104, and may authenticate owner device 104 and/or the user of owner device 104 based on the one or more authentication credentials. Further, in some aspects, computing system 108 may parse access control data 201 to obtain data identifying the newly authorized device (e.g., client device 106) and the one or more access parameters that define the scope of client device 106's authorized access. Computing system 108 may, in certain embodiments, access portions of the stored ACL corresponding to resource device 102, and update the accessed ACL portion to include the data identifying client device 106 and further, the access parameters that define, limit, and/or restrict client device 106's ability to access resource device 102 (e.g., to generate an updated ACL 202).

Additionally, in some embodiments, a user of client device 106 may be associated with a cloud-service account (e.g., Google Cloud™ or another cloud service maintained by computing system 108), and client device 106 may locally store one or more authentication credentials issued by computing system 108. In certain aspects, client device 106 may transmit authentication data 203 to computing system 108 (e.g., across network 122 using any of the secure communications protocols outlined above). Authentication data 203 may include, among other things, the one or more authentication credentials issued to client device 106, and computing system 108 may authenticate client device 106 based on a comparison of the received authentication credentials and stored cloud-service account data (e.g., data identifying valid GAIA™ accounts, data identifying valid Google Cloud™ accounts, etc.).

If the received authentication credentials fail to match the stored cloud-service account data, computing system 108 may generate, and transmit to client device 104, outcome data 204 indicative of the failed authentication attempt. If, however, computing system 108 were to match the received authentication credentials with portions of the stored cloud-service account data, computing system 108 may deem the authentication process successful, and may transmit outcome data 204 confirming the successful authentication to client device 106.

In response to the successful authentication, client device 106 may generate and transmit a request to access resource device 102 (e.g., access request 205) to computing system 108 (e.g., across network 122 using any of the secure communication protocols outlined above). Access request 205 may, in some aspects, include an identifier of resource device 102 (e.g., a MAC address, an IP address, etc.). In other aspects, consistent with the disclosed embodiments, access request 205 may not be device-specific, and may instead request access to all devices for which owner device 104 granted client device 106 access privileges. As described above, client device 106 may transmit access request 205 across network 122 to computing system 108 using any of the secure communication protocols outlined above.

Computing system 108 may receive access request 205, and may determine whether the requested access to resource device 102 is consistent with a level of access granted to client device 106 by owner device 104. For example, 108 may parse the access request 205 to identify resource device 102 and additionally or alternatively, client device 106. In certain aspects, computing system 108 may access a locally stored copy of the ACL corresponding to resource device 102, and based on entries in the ACL, determine whether owner device 104 granted client device 106 access to resource device 102.

If, based on the ACL entries, computing system 108 were to determine that that owner device 104 did not grant client device 106 (and/or a user of client device 106) access to resource device 102, computing system 108 may generate and transmit an error message to client device 106 indicative of the lack of granted access (not depicted in FIG. 2). If, however, computing system 108 were to determine that owner device 104 granted client device 106 (and/or a user of client device 106) access to resource device 102, computing system 108 may generate a local device token and a local access token (e.g., local token data 206 of FIG. 2) that collectively facilitate client device 106's ability to access one or more functions of resource device 102.

In certain aspects, computing system 108 may access stored copies of master device and access tokens (e.g., as generated by and received from resource device 102 after a successful registration process), and may generate or "mint" the local device token and the local device token based on extensions to respective ones of the master device and access token. For example, as described above, the master device token may be formatted as a macaroon, the caveats of which may include, but are not limited to, an identifier of resource device 102 (e.g., a MAC address, etc.) and random data (e.g., a device-specific random nonce) generated by resource device 102. To generate the local device token, computing system 108 may extend the master device token by adding one or more additional caveats (e.g., a device identifier of client device 106, additional random data as random nonces, etc.), and then by recursively applying an appropriate MAC algorithm to the additional caveats using the previous tag as the key.

Further, and by way of example, the master access token may also be formatted as a macaroon, the caveats of which may include, but are not limited to, a role associated with the owner of the resource device (e.g., a highest available privilege) and/or random data (e.g., a device-specific random nonce) generated by resource device 102. In certain aspects, to generate the local access token, computing system 108 may extend the master device token by adding additional caveats that identify the one or more limitations and/or restrictions imposed by owner device 104 on client device 106's access of resource device 102 (i.e., the one or more access parameters stored in the ACL) along with additional random data (e.g., random nonces).

For instance, computing system 108 may process the ACL corresponding to resource device 102 to extract access parameters indicative of the one or more limitations and/or restrictions imposed by owner device 104 on client device 106's ability to access resource device 102. As noted above, the imposed limitations and restrictions may include, but are not limited to, an expiration date, a temporal limitation (e.g., valid dates and times for access), a session-based restriction (e.g., limiting the delegated access to a single, established communications session), restrictions on types of access (e.g., use of functions, modification of settings, etc.), a role of client device 106 (e.g., owner, manager, user, etc.), an ability of client device 106 to further delegate access (e.g., to mint additional tokens), and/or an ability of client device 106 to access resource device 102 off-line (e.g., without access to network 122). Computing system 108 may then generate a new tag for the local access token by applying an appropriate MAC algorithm to the additional caveat set using the previous tag (e.g., from the master access token) as the key.

In some aspects, the generated local device and access tokens may be "short-lived" (i.e., may be valid for a period of one hour, one day, etc.), and computing system 108 may store the generated local device and access tokens within a local memory or data repository. Additionally, MAC algorithms consistent with the disclosed embodiments may include, but are not limited to, an HMAC-SHA256 algorithm with a tag length of sixteen bytes and other algorithms appropriate with the client device 106, resource device 112, and network 122. Computing system 108 may then generate data that includes the generated local device and access tokens (e.g., local token data 206), and transmit local token data 206 to client device 106 across network 122 using any of the secure communication protocols outlined above. In some aspects, client device 106 may receive local token data 206 from computing system 108 across network 122, and may store the copies of the local device and access tokens within a local memory or data repository.

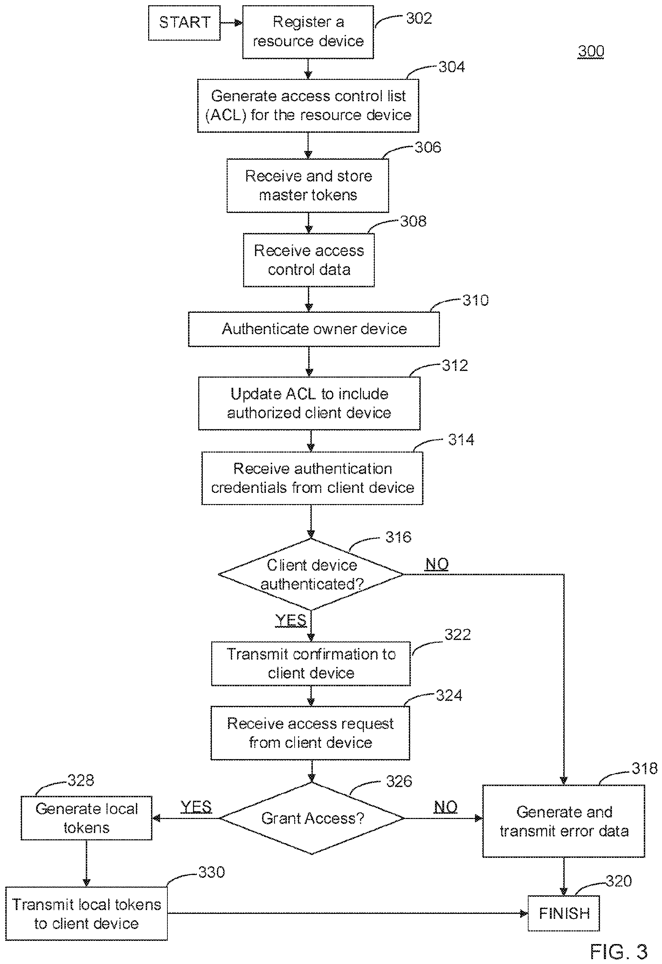

FIG. 3 is a flowchart of an exemplary process 300 delegating access control decisions from a resource device to one or more computing devices, in accordance with the disclosed embodiments. In certain aspects, a computer system operating as a cloud server (e.g., computing system 108) may perform the steps of exemplary process 300, which may enable a resource device (e.g., resource device 102) to delegate access control decisions to computer computing system 108, and which provide rights to access resource device 102 to one or more client devices (e.g., client device 106) designated by a device of an owner of resource device 102 (e.g., owner device 104).

In some aspects, consistent with the disclosed embodiments, owner device 104 may perform operations that discover resource device 102 operating across network 124. For example, resource device 102 may be discoverable to devices operating across network 124, and may broadcast advertisement data indicative of its discoverable state to devices operating across network 124. In certain aspects, resource device 102 may be publicly or privately discoverable, and owner device 104 may discover resource device 102, either in a publicly or privately discoverable state, using any of the exemplary techniques described above.

In response to owner device 104's successful discovery of resource device 102, computing system 108 may perform operations that register resource device 102 and associate resource device 102 with a cloud-service account of the owner of resource device 102 (e.g., a GAIA™ account, a Google Cloud™ account, etc.) and additionally or alternatively, with owner device 104 (e.g., in step 302). For example, owner device 104 may establish communications with computing system 108 across network 122, and may provide one or more authentication credentials to computing system 108 (e.g., user names, passwords, biometric data, tokens, digital certificates, etc.). Computing system 108 may, in some aspects, compare the received authentication credentials against stored authentication data (e.g., stored GAIA™ account data, stored Google Cloud™ account data, etc.) to authenticate owner device 104.

As described above, owner device 104 may generate data supporting the registration of resource device 102 with computing system 108 (e.g., based on data input by a user of owner device into a presented registration template), and owner device 104 may transmit the generated registration data to computing system 108 across network 122 (e.g., using any of the secure communication protocols described above). The generated registration data may include, but is not limited to, data identifying resource device 102, owner device 104, and/or the cloud-service account associated with the owner of resource device 102.

Computer computing system 108 may receive the registration data in step 302, and may generate a unique registration ticket identifier linked to owner device 104, the owner's cloud-service account, and to resource device 102. Computing system 108 may, in some instances, store the generated registration ticket identifier in a local memory or data repository, and may transmit the generated registration ticket identifier to owner device 104 across network 122 using one or more secure communications protocols (e.g., secure hypertext transfer protocols (HTTPS), etc.).

Owner device 104 may receive the registration ticket identifier from computing system 108, and in some aspects, may encrypt the registration ticket identifier using a shared private cryptographic key prior to transmitting the encrypted registration ticket identifier to resource device 102 across network 124. Resource device 102 may receive (and if appropriate, decrypt) the encrypted registration ticket identifier, which may be stored in a local memory or data repository. Further, in certain aspects, resource device 102 may provide the registration ticket identifier to computing system 108 (e.g., through a call to an appropriate application programming interface (API), such as a Privet API consistent with the Weave protocols) to complete the registration process.

Computing system 108 may receive the registration ticket identifier through the API, and based on the registration ticket identifier, may generate and issue one or more authentication credentials to resource device 102 (e.g., in step 302). Computing system 108 may transmit the generated and issued authentication credentials across network 122 to resource device 102, which may receive and store the issued authentication credentials in a local memory or data repository. Further, based on the issued authentication credentials, resource device 102 may establish a secured communication session with computing system 108 across network 122.

In additional aspects, and in response to the registration of resource device 102, computing system 108 may generate and locally store an access control list (e.g., ACL) for resource device 102 (e.g., in step 304). The generated and stored ACL may identify, among other things, one or more devices authorized to access resource device 102 and one or more access parameters that define limitations and restrictions imposed by owner device 104 on the authorized access. In certain aspects, the access parameters may include, but are not limited to, a token expiration date, a session-based restriction (e.g., limiting the delegated access to a single, established communications setting), a temporal restriction (e.g., a period of validity, etc.), a restriction on a type of access (e.g., use of specific functions, modification of settings, etc.), a role or privilege level assigned to an authorized device (e.g., owner, manager, user, etc.), an ability of an authorized device to further delegate access (e.g., to re-share access), and/or an availability of an authorized device to access resource device 102 off-line (e.g., without access to network 122). In some instances, computing system 108 may associate the generated and stored ACL with owner device 104 and/or a cloud-service account associated with owner device 104, and as described below, computing system 108 may perform processes that access and modify the stored ACL in response to access control data received from owner device 104.

In certain aspects, resource device 102 may delegate its access control decisions to computing device 108, which may share access privileges with one or more additional devices (e.g., client device 106) in accordance with limitations and restrictions imposed by owner device 104. To facilitate this delegation, resource device 102 may establish a secure communications session with computing system 108 (e.g., based on the issued authentication credentials), and may transmit copies of a master device token and a master access token to computing system 108 across network 122 (e.g., using any of the secure communications protocols outlined above). Computing device 108 may, in some aspects, receive the master device and access tokens from resource device 102 (e.g., in step 306), and may store the received master device and access tokens in a local memory or data repository. As described below, computing system 108 may modify a structure of the master device and/or access tokens to generate local tokens that provide one or more client devices (e.g., client device 106) access to resource device 102.

For example, and as described above, the master device and access tokens may be formatted as macaroons having a sequence of byte-strings (e.g., caveats) and an authentication tag (e.g., a digital signature) computed recursively by applying a message authentication code (MAC) algorithm to each caveat in a nested fashion. The caveats of the master device token may include, but are not limited to, an identifier of resource device 102 (e.g., a MAC address, etc.) and random data (e.g., a device-specific random nonce) generated by resource device 102. In additional instances, the caveats of the master access token may include, among other things, a role or privilege level associated with the owner of the resource device (e.g., a highest available privilege) and the device-specific random nonce. Further, the digital signatures applied to the tokens may, in some instances, reduce a likelihood that a malicious party could intercept and perform unauthorized modifications to portions of the caveat data.

In certain aspects, computing system 108 may be configured to receive access control data (e.g., access control data 201 of FIG. 2) from owner device 104 (e.g., in step 308). The received access control data may, for example, include information that (i) identifies a device (e.g., client device 106) authorized to access resource device 102 and (ii) specifies one or more of the access parameters that define, limit, and/or restrict client device 106's authorized access. In some instances, a user of owner device 104 may provide at least a portion of the received access control data as input to a graphical user interface (GUI) associated with computing system 108 (e.g., as generated by a mobile application executed by owner device 104 and/or a web page accessed and rendered for presentation by owner device 104).

By way of example, the received access control data may include an identifier of client device 106 and/or an identifier of a user that operates client device 106. Further, and as described above, the received access control data may specify access parameters that include, but are not limited to, session-based restrictions, temporal restrictions, restrictions on types of access, roles or privilege levels, restrictions on subsequent delegation, and restrictions on off-line access imposed by owner device 104 on client device 106's ability to access resource device 102. In some instances, and consistent with the disclosed embodiments, the role or privilege level specified by the user of owner device 104 must be equivalent to, or lower than, a comparable privilege level of owner device 104. In additional aspects, the received access control data may include one or more authentication credentials (e.g., a login name of the cloud-service account associated with owner device 104, a password, biometric data, etc.) that enable computing system 108 to authenticate owner device 104 and/or the user of owner device 104.

In step 310, computing system 108 may be configured to authenticate owner device 104 (e.g., based on a comparison of the received authentication credentials with stored cloud-service account data), and further, to parse the received access control data to identify the newly authorized device (e.g., client device 106) and the one or more access parameters that define, limit, and/or restrict client device 106's access to resource device 102. Computing system 108 may also access the locally stored ACL, and in step 312, modify at least a portion of the accessed ACL to include data identifying client device 106 and the one or more access parameters (e.g., updated ACL 202 of FIG. 2).

In some aspects, a user of client device 106 may be associated with a cloud-service account (e.g., Google Cloud™ or another cloud service maintained by computing system 108), and client device 106 may locally store one or more authentication credentials issued by computing system 108. Client device 106 may, in some instances, transmit authentication data (e.g., authentication data 203 of FIG. 2) across network 122 to computing system 108 using any of the secure communications protocols outlined above. Computing system 108 may receive the authentication data from client device 106 (e.g., in step 314), and may authenticate client device 106 based on a comparison of the received authentication data and stored cloud-service account data using any of the exemplary techniques described herein (e.g., in step 316).

If computing system 108 were unable to match client device 106's authentication credentials with the stored cloud-service account data (e.g., step 316; NO), computing system 108 may generate and transmit error data indicative of the failed authentication to client device 106 across network 122 (e.g., in step 318). Exemplary process 300 is then complete in step 320.

If, however, computing system 108 were able to match client device's authentication credentials with a portion of the stored cloud-service account data (e.g., step 316; YES), computing system 108 may generate and transmit a confirmation of the successful authentication to client device 106 across network 122 (e.g., in step 322).

In response to the successful authentication, client device 106 may generate and transmit a request for local access to resource devise 102 (e.g., access request 205) to computing system 108. Access request 205 may, in some aspects, include identifiers of resource device 102 and client device 106 (e.g., a MAC address, an IP address, etc.)

Computing system 108 may receive the access request from client device 106 (e.g., in step 324), and may determine whether the requested access is consistent with the access granted to client device 106 by owner device 104 (e.g., in step 326). For example, in step 326, computing system 108 may parse the received access request to identify resource device 102 and additionally or alternatively, client device 106. Computing system 108 may also access the locally stored copy of the ACL corresponding to resource device 102, and based on the entries of the ACL, determine whether owner device 104 granted client device 106 access to resource device 102.

If owner device 104 failed to grant access to client device 106 (e.g., step 326; NO), computing system 108 may pass back to step 318, may generate and transmit error data indicative of the lack of granted access to client device 106 across network 122. Exemplary process 300 is then complete in step 320.

Alternatively, of computing system 108 were to determine that owner device 104 granted client device 106 access to resource device 102 (e.g., step 326; YES), computing system 108 may generate a local device token and a local access token (e.g., local tokens 206 of FIG. 2) that collectively facilitate client device 106's access to resource device 102 (e.g., in step 328). In certain aspects, in step 328, computing system 108 may access locally stored copies of master device and access tokens (e.g., as generated by and received from resource device 102 after a successful registration process), and may generate or "mint" the local device token and the local device token based on extensions to respective ones of the master device and access token.

For example, as described above, the master device token may be formatted as a macaroon, the caveats of which may include, but are not limited to, an identifier of resource device 102 (e.g., a MAC address, etc.) and random data (e.g., a random nonce) generated by resource device 102. To generate the local device token in step 328, computing system 108 may extend the master device token by adding one or more additional caveats (e.g., a device identifier of client device 106, additional random data as random nonces, etc.), and may recursively apply an appropriate MAC algorithm to the additional caveats using the previous tag as the key.

Further, and by way of example, the master access token may also be formatted as a macaroon, the caveats of which may include, but are not limited to, a role or privilege level associated with the owner of the resource device (e.g., a highest available privilege) and/or random data (e.g., a random nonce) generated by resource device 102. In certain aspects, to generate the local access token in step 328, computing system 108 may extend the master access token by adding one or more additional caveats that identify the one or more limitations and/or restrictions imposed by owner device 104 on client device 106's access of resource device 102 (i.e., the one or more access parameters stored in the ACL) along with additional random data (e.g., random nonces).

For instance, computing system 108 may parse the locally stored ACL to extract access parameters indicative of the limitations and/or restrictions imposed by owner device 104 on client device 106's ability to access resource device 102. As noted above, the imposed limitations and restrictions may include, but are not limited to, an expiration date, a temporal limitation (e.g., valid dates and times for access), a session-based restriction (e.g., limiting the delegated access to a single, established communications session), restrictions on access types (e.g., use, modification of settings, etc.), a role of client device 106 (e.g., owner, manager, user, etc.), an ability of client device 106 to further delegate access (e.g., and mint additional tokens), and/or an ability of client device 106 to access resource device 102 off-line (e.g., without access to network 122). Computing device 108 may then generate a new tag for the local access token by applying an appropriate MAC algorithm to the additional caveat set using the previous tag (e.g., from the master access token) as the key.

Computing system 108 may then transmit the generated local device and access tokens (e.g., local token data 206 of FIG. 2), to client device 106 across network 122 using any of the secure communication protocols outlined above (e.g., in step 330). Exemplary process 300 is then complete in step 320.

In the embodiments described above, computing system 108 may be configured to generate the local device and/or access tokens in response to an access request received from client device 106. In other aspects, and consistent with the disclosed embodiments, computing system 108 may instead perform processes that mint and store the local device and/or access tokens at specified or predetermined intervals (e.g., hourly, daily, etc.) or in response to a detected occurrence of one or more events (e.g., a modification to an ACL in response to a request from owner device 104). In additional aspects, computing system 108 may also perform operations to "push" additional versions of the local device and/or access tokens to client device 106 (e.g., across network 122 using any of the secure communication protocols described above) at specific or predetermined times, or in response to any of the events described above.

In certain embodiments, the exemplary processes described above may enable resource device 102 to delegate access control decisions to computing system 108 (e.g., a cloud server, such as a server maintained by Google Cloud™), which may provide client device 106 with access to resource device 102 in accordance with one or more limitations and/or restrictions imposed by owner device 104. For example, as described above, computing system 108 may provide a local device token and a local client to client device 106. In additional embodiments, outlined below, the local device and access tokens may enable client device 106 to establish a secure, direct wireless connection with resource device 102 (e.g., across network 126), and to access resource device 102 in accordance with the limitations and/or restrictions imposed by owner device without requiring additional network communication with owner device 104 or computing system 108.

In some aspects, consistent with the disclosed embodiments, client device 106 may perform operations that discover resource device 102 operating across network 126. For example, resource device 102 may be discoverable to devices operating across network 126, and may broadcast advertisement data indicative of its discoverable state to devices operating across network 126. In certain aspects, resource device 102 may be publicly or privately discoverable, and client device 106 may discover resource device 102, either in a publicly or privately discoverable state, using any of the exemplary techniques described above.

Upon discovery of resource device 102 by client device 106, client device 106 and resource device 102 may initiate processes to establish a secure, direct connection across network 126, such as the low-energy BLE network described above. For example, client device 106 may, upon receipt and storage of the local device token (e.g., as received from computing system 108), may generate random data (e.g., a client-specific random nonce), and may extract a sequence of caveats from the stored local token. The extracted sequence of caveats may include, but is not limited to, an identifier of resource device 102 (e.g., a MAC address, etc.) and random data generated by resource device 102 (e.g., a device-specific random nonce).

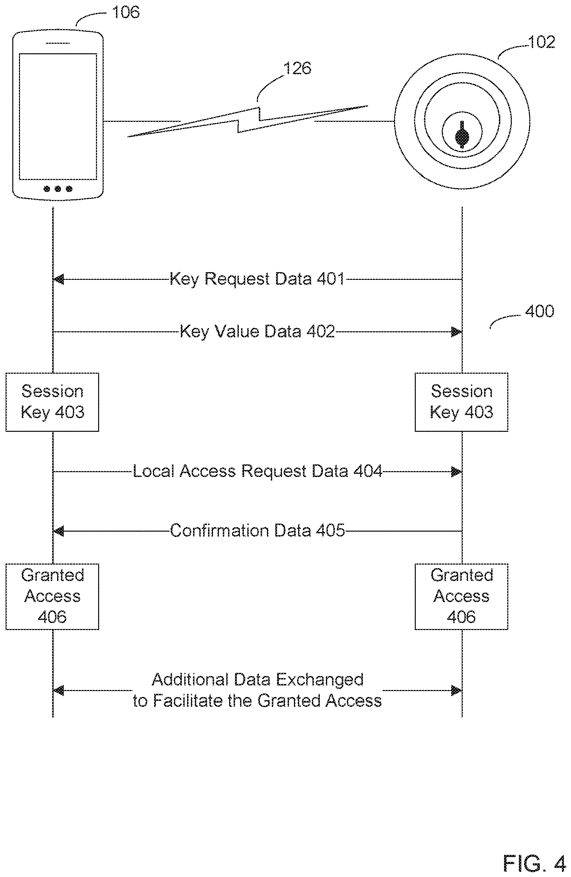

In certain aspects, client device 106 may be configured to compute a first value (e.g., a first hash) of a symmetric cryptographic key based on an application of a MAC algorithm (e.g., a HMAC-SHA256 algorithm with a tag length of sixteen bytes) to the stored local device token and the generated client-specific random nonce. Further, as described below in reference to FIG. 4, client device 106 may request that resource device 102 compute a second value of the symmetric cryptographic key based on a MAC algorithm recursively applied to a root cryptographic key (e.g., as maintained by resource device 102), the extracted caveat sequence, and the generated client-specific random nonce, and further, may verify an identity of resource device 102 based on a comparison of the first and second symmetric cryptographic keys.

FIG. 4 is a schematic diagram illustrating an exemplary exchange of data 400 that facilitates a token-based access of resource device 102 by client device 106, in accordance with disclosed embodiments. For instance, client device 106 may transmit, to resource device 102 across network 126, data (e.g., key request data 401) requesting that resource device compute the second value of the symmetric cryptographic key. Key request data 401 may include, but is not limited to, the extracted sequence of caveats and the client-specific random nonce, and in certain aspects, client device 106 may encrypt key request data 401 using a shared private cryptographic key, as described above. The disclosed embodiments are, however, not limited to these exemplary encryption schemes, and in other aspects, client device 106 may encrypt key request data 401 using any additional or alternate encryption scheme appropriate to key request data 401, client device 106, and resource device 102 (or alternatively, may transmit key request data 401 in the clear without encryption).

In some aspects, resource device 102 may receive (and if appropriate, decrypt) key request data 401, and may compute the requested second value of the symmetric cryptographic key based on a recursive application of the MAC algorithm to the root cryptographic key, the extracted caveat sequence, and the generated client-specific random nonce. For example, the MAC algorithm may include a HMAC-SHA256 algorithm with a tag length of sixteen bytes. Resource device 102 may, in some instances, compute a hash value based on a first application of the MAC algorithm to the root cryptographic key and the extracted caveat sequence, and may compute the second value of the symmetric cryptographic key based on a second application of the MAC algorithm to the computed hash value and the client-specific random nonce. Resource device 102 may, in some aspects, transmit key data that includes the second cryptographic key (e.g., key value data 402) to client device 106 across network 126. In some instances, as described above, resource device 102 may encrypt key data using the shared private cryptographic key and additionally or alternatively, any other encryption scheme appropriate to key value data 402, resource device 102, and client device 106 (or alternatively, may transmit key request data 401 in the clear without encryption).

Client device 106 may receive and (and if appropriate, decrypt) key value data 402 to obtain the second value of the symmetric cryptographic key, which client device 106 may compare against the computed first value. If client device 106 were to determine that the first and second values fail to match, client device 106 may transmit a response indicative of a failed connection attempt to resource device 102 (not shown in FIG. 4), which may cancel the connection process with client device 106 and cause resource device 102 to broadcast additional advertisement data to initiate discovery processes with other devices operating across network 126.

Alternatively, if client device 106 were to determine a match between the first and second values of the symmetric cryptographic keys, client device 106 may verify an identity of resource device 102, and may establish a secure, direct connection with resource device 102 across network 126. In certain aspects, by verifying the identity of resource device 102 (e.g., that client device 106 is establishing a connection with the correct device), client device 106 may ensure that no attacker or malicious party attempts a man-in-the-middle attack. Further, the first and second values of symmetric cryptographic keys computed by client device 106 and resource device 102 may, in some aspects, represent session keys 403 that may encrypt future communications between client device 106 and resource device 102 across the established direct wireless connection, including those communications that enable client device 106 to access one or more functions of resource device 102 in accordance with the stored local access token.

In certain aspects, client device 106 may transmit, to resource device 102 across the established wireless connection, a request to access one or more functions of resource device 102 (e.g., local access request data 404). Client device 106 may, for instance, include data identifying the requested local access (e.g., a scope, type, and/or duration of access) and further, may include a copy of the stored local access token. Resource device 102 may receive (and if appropriate, decrypt) local access request data 404, and may parse local access request data 404 to obtain the local access token and the data identifying the requested access. In some aspects, resource device 102 may establish the validity of the local access token and its indicated authorization chain and further, may determine whether the requested local access is consistent with the access parameters included within the local access token (e.g., as embedded in one or more caveats of the local access token by computing system 108).

For example, as described above, computing system 108 may generate the local access token based on an extension of a master access token generated and maintained by resource device 102. In certain aspects, resource device 102 may extract a sequence of caveats from the received copy of the local access token (e.g., which may specify the access parameters defining client device 106's local access privileges), and apply a MAC algorithm to the extracted caveat sequence and the master access token (e.g., as generated and stored by resource device 102) to generate a device-specific copy of the local access token.

When the received and the device-specific copies of the local access token match (e.g., the tags of the received and the device-specific copies of the local access token match), resource device 102 may establish the validity of the received copy of the local access token. In certain aspects, and in response to the determined validity, resource device 102 may determine whether the access requested by client device 106 is consistent with the access granted by owner device 104, e.g., as specified within the access parameters of the extracted caveat sequence.

For example, resource device 102 may parse the access request received from client device 106 to identify the one or more requested functions, and further to determine or identify a role required of client device 106 to access the requested functions. Further, and as described above, resource device 102 may determine, based on the extracted caveat sequence, that the local access token has not yet expired (e.g., that the expiration date specified in the access parameters has not yet occurred). Resource device 102 may also identify a role or privilege level assigned client device 106 (e.g., based on a role specified within the access parameters), and may identify one or more additional restrictions (e.g., temporal restrictions, restrictions on type of access, restrictions on off-line usage and on subsequent delegation, etc.) imposed on client device 106 by owner device 104.

In certain aspects, resource device 102 may determine whether the role required by client device 106 to access the requested functions is consistent with the role assigned to client device 106 (e.g., by owner device 104), and further, whether the requested functions are consistent with the one or more additional restrictions imposed by owner device 104. When the requested access is consistent with the assigned role and with the imposed restrictions, resource device 102 may generate and transmit data indicative of the determined consistency and confirming a grant of the requested access (e.g., access confirmation data 405) to client device 106 across network 126, and resource device 102 may grant the requested access to client device 106 (e.g., granted access 406). Alternatively, when resource device 102 deems the requested access inconsistent with the assigned role and/or the imposed restrictions, resource device 102 may generate and transmit an error message (not depicted in FIG. 4) to client device 106 across network 126 (e.g., which may prompt the client device 106 to modify the requested access). Client device 106 and resource device 102 may then exchange additional data that facilitates client device 106's access to resource device 102.

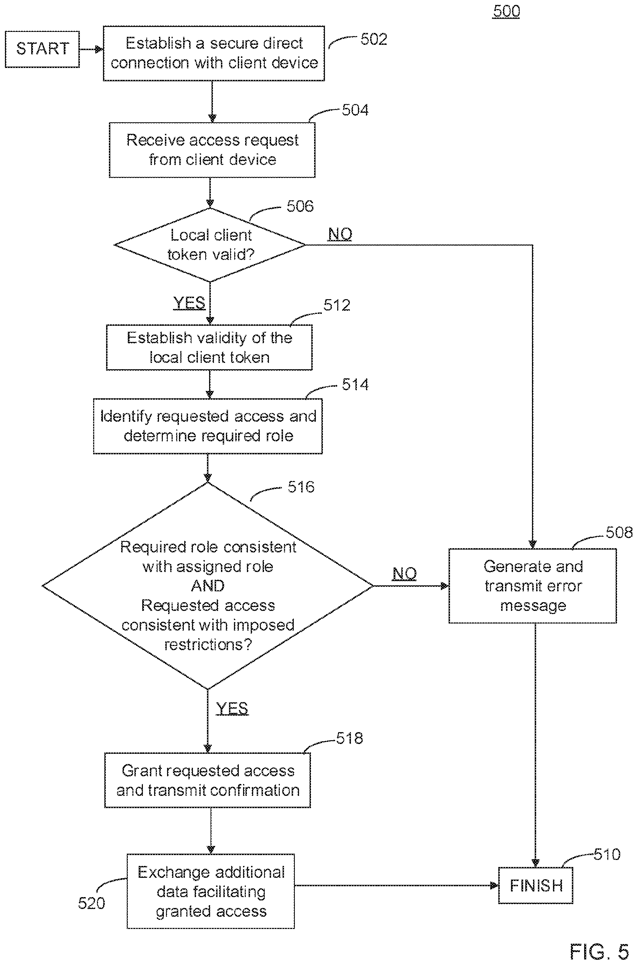

FIG. 5 is a flowchart of an exemplary process 500 for granting a client device access to a resource device, in accordance with the disclosed embodiments. In certain aspects, a resource device (e.g., resource device 102) may perform the steps of exemplary process 500, which may enable resource device 102 to establish a secure and direct wireless connection with a client device that requests access (e.g., client device 106), and to grant access to client device 106 based on a local access token (e.g., a local access token) presented to resource device 102 by client device 106 across the direct wireless connection.

In some aspects, resource device 102 may perform operations that, in conjunction with verification operations performed by client device 106, establish a secure and direct wireless connection between resource device 102 and client device 106 across a network 126 using any of the exemplary techniques described above (e.g., in step 502). For example, and as described above, when a client-specific value of a symmetric cryptographic key (e.g., a computed by client device 106) corresponds to a device-specific value of the symmetric cryptographic key (e.g., as computed by resource device 102, client device 106 and resource device 102 may collectively establish the secure and directed wireless connection across network 126 (e.g., in step 502). Further, client device 106 and resource device 102 may also collectively establish respective ones of the client-specific and device-specific values of the symmetric cryptographic key as session keys (e.g., session keys 403 of FIG. 4), with which client device 106 and resource device 102 may encrypt subsequent communications across the secure, directed wireless connection (e.g., as established in step 502).

In some aspects, resource device 102 may receive a request to access one or more functions of resource device 102 (e.g., local access request data 404 of FIG. 4) from client device 106 across the established wireless connection (e.g., in step 504). In some aspects, the received request may include data identifying the requested local access (e.g., a scope, type, and/or duration of access) and further, may include a copy of the stored local access token.

Resource device 102 may parse the received request to obtain at least a portion of the local access token and the data identifying the requested access, and in some aspects, may determine a validity of the local access token and its indicated authorization chain (e.g., in step 506). For example, as described above, computing system 108 may generate the local access token based on an extension of a master access token generated and maintained by resource device 102. Resource device 102 may, in certain aspects, extract a sequence of caveats from the received portion of the local access token (e.g., which may specify the access parameters defining client device 106's local access privileges), and apply a MAC algorithm to the extracted caveat sequence and the master access token (e.g., as generated and stored by resource device 102) to compute a device-specific copy of the received portion of the local access token. Further, resource device 102 may determine a validity of the local access token (and thus, determine that the received portion is derived from a valid token that authoritzes access to resource device 102) based on a comparison of the received and computed copies of the local access token (e.g., a comparison of the tags of the received and computed copies of the local access token, in macaroon form). In certain aspects, resource device 102 may be configured to determine the validity of the received local access token based on locally stored data and without communication with computing system 108 across network 122.

If resource device 102 were to determine that the received copy of the local access token fails to match the computed copy of the local access token (e.g., step 506; NO), resource device 102 may generate and transmit to client device 106 error data indicative of the invalid local access token (e.g., in step 508). Exemplary process 500 is then complete in step 510.

If, however, resource were to detect a match between the received and computed copies of the local access token (e.g., step 506; YES), resource device 102 may establish that the received portion of the local access token is derived from a valid token, and thus, establish the validity of the local access token (e.g., in step 512). In certain aspects, and in response to the determined validity, resource device 102 may determine whether the access requested by client device 106 is consistent with the access granted by owner device 104, e.g., as specified within the access parameters of the extracted caveat sequence (e.g., in step 514).

For example, in step 514, resource device 102 may parse the access request received from client device 106 to identify the one or more requested functions, and further to determine or identify a role required of client device 106 to access the requested functions. Further, resource device 102 may determine, based on portions of the caveat sequence, that the local access token has not yet expired (e.g., that the expiration date specified in the access parameters has not yet occurred). In step 514, resource device 102 may also identify a role or privilege level assigned to client device 106 (e.g., based on a role specified within the access parameters), and may identify one or more additional restrictions (e.g., temporal restrictions, restrictions on type of access, restrictions on off-line usage and on subsequent delegation, etc.) imposed on client device 106 by owner device 104.

In certain aspects, resource device 102 may determine in step 516 whether the role required by client device 106 to access the requested functions is consistent with the role assigned to client device 106 (e.g., by owner device 104), and further, whether the requested functions are consistent with the additional limitations and restrictions imposed by owner device 104 (e.g., within the access parameters). When resource device 102 determines that the required role is inconsistent with the assigned role (e.g., the requested functions require a "manager" role, the owner device assigned client device 106 a lower role of "user") and/or the requested functions are inconsistent with the imposed limitations and restrictions (e.g., step 516; NO), resource device 102 may pass back to step 518, and may generate and transmit an error message to client device 106 across network 126. Exemplary process 500 is then complete in step 510.

Alternatively, if the resource device 102 determines that the required role is consistent with the assigned role, and that the requested functions are consistent with the imposed limitations and restrictions (e.g., step 516; YES), resource device 102 may generate and transmit data indicative of the determined consistency and confirming a grant of the requested access (e.g., access confirmation data 405 of FIG. 4) to client device 106 across network 126 (e.g., in step 518). Resource device 102 may grant the requested access to client device 106, and may exchange additional data that facilitates client device 106's access to the requested functions (e.g., in step 520). Exemplary process 500 is then complete in step 510.

Using one or more of the disclosed exemplary embodiments, a device of entity that owns or controls resource device 102 (e.g., owner device 104) may share access to resource device 102 with one or more client devices (e.g., through client device 106). As described above, owner device 104 may establish communications with computing system 108 across network 122, and may provide data identifying the one or more entities having access privileges (e.g., a device identifier of client device 106) and to specify the limitations and/or restrictions that define these access privileges. The disclosed embodiments, however, require neither a direct, wireless connection between owner device 104 and client device 106 to facilitate a provision of access rights to client device 106, nor do they require client device 106 to verify or prove its identity to owner device 104. Further, in certain embodiments described above, owner device 104 may authenticate itself with and provide data indicate of shared access privileges to computing system 108 independent of resource device 102 and client device 106, which may be offline and/or powered off.

Further, as described above, client device 106 may authenticate itself to computing system 108 over network 122 and obtain local device and access tokens that facilitate client device 106's access to resource device 102 (e.g., in accordance with the limitations and/or restrictions imposed by owner device 104 and incorporated into an access control list (ACL) maintained by computing system 108). Although client device 106 may establish communications with computing system 108 across network 122 to request and obtain these tokens, the disclosed embodiments impose no requirement on resource device 102 and owner device 104, which may be offline without connection to network 122 while client device 106 performs processes to request and obtain these tokens.

In additional aspects, client device 106 and resource device 102 may exchange data across network 126 (e.g., a low-energy BLE network) to verify and establish client device 106's access to one or more functions of resource device 102. The disclosed embodiments impose no requirement that client device 106 and/or resource device 102 be connected to network 122 during the exemplary negotiation processes described above, and further, resource device 102 may determine a validity of the local access token (e.g., as provided by client device 106) offline and absent communications with client device 106, owner device 104, and/or computing system 108.

Further, as described above, the local device authentication and local access token may represent "short-lived" tokens that expire soon after generation by computing system 108 (e.g., expiration dates thirty minutes, one hour, one day, etc., after generation or minting). In other aspects, and consistent with the disclosed embodiments, owner device 104 may grant an authorized device (e.g., client device 106) permission to access resource device 102 while offline and without connection to network 122. For example, computing system 108 may specify the offline access granted to client device 106 within a portion of the caveat data of a corresponding local access token (e.g., using any of the exemplary techniques described above). Additionally, in certain embodiments, computing system 108 may delay an expiration date of the corresponding local access token (e.g., to generate a "long-lived" token expiring days, weeks, or months after generation by computing system 108) to facilitate client device 106's offline access of resource device 102.

Additionally, in certain exemplary embodiments, a user of a device granted access to resource device 102 by owner device 104 (e.g., a user of client device 106) may hold an account of a cloud service maintained by computer computing system 108 (e.g., a GAIA™ account and/or a Google Cloud™ account), and an access control list (ACL) corresponding to resource device 102 may associated with granted access privileged with the cloud-service account. The disclosed embodiments are, however, not limited to processes that grant access to cloud-service account holders, and in further embodiments, owner device 104 may transmit access control data that grants access privileges to an authorized device and identifies an out-of-band communication mechanism by a user of the authorized device may access the local device and access tokens, as described above. For example, out-of-band communication mechanism may include, but is not limited to, an email address or account, a handle within a social media network (e.g., Facebook™, Twitter™, Google+™, etc.), a handle within a chat network or messaging service (e.g., a WhatsApp™ username), and a telephone number capable of receiving SMS and/MMS text messages.

In certain aspects, consistent with the disclosed embodiments, computing system 108 may incorporate data identifying the out-of-band communication mechanism within a portion of the corresponding ACL. Upon generation of the local device and/or access tokens (e.g., using any of the exemplary techniques described above), computing system 108 may identify the out-of-band communication mechanism from the portion of the ACL, may generate a URL providing client device 106 with an ability to access and locally store the local device and/or access tokens, and may transmit the URL to client device 106 in accordance with the out-of-band communication mechanism.

For instance, the user of client device 106 may activate the URL (e.g., by touching, clicking, etc., within a display unit of client device 106), and client device 106 may obtain copies of the local device and/or access tokens. In other instances, application programs executed by client device 106 (e.g., Croissant™ for Android™) may automatically recognize the received URL and fetch the local device and/or access tokens in the background without user intervention. In some aspects, computing system 108 may impose additional restrictions on local device and/or access tokens retrieved through out-of-band communications mechanisms, including shorter period of validity and limits on a number of access attempts by client device 106.

Further, in certain aspects, resource device 102 may not be connected to computing system 108 across network 122 (e.g., due an owner's opt-out) and additionally or alternatively, may be incapable of accessing network 122 (e.g., as may occur in low-power devices, such as smart locks, etc.). Absent access to network 122, resource device 102 may be unable to delegate access control decisions to computing system 108, and further, may be unable to store master device and/or access tokens on system 1908 or request that computing system 108 mint additional local tokens based on the master device and/or access tokens.

In additional embodiments, absent access to network 122, resource device 102 may delegate access-control decisions to owner device 104 (and additionally or alternatively, to another device specified by owner device 104), and owner device 104 may maintain copies of the master device and/or access tokens (e.g., as transmitted across network 124 after the exemplary discovery processes described above). In additional aspects, owner device 104 may establish, maintain, and/or update access control lists, receive requests from client device 106 to access resource device, and further, generate or mint local device and/or access tokens using any of the exemplary processes described above.

The disclosed embodiments may, for example, enable owner device 104 to share the minted local device and/or access tokens with authorized devices (e.g., client device 106) using any appropriate out-of-band communication mechanism. For instance, owner device 104 may generate BLOBs and/or URLs representative of the stored local device and/or access tokens, and may transmit the BLOBs and/or URLs using any out-of-band communication channel (e.g., text message, email message, direct chat message, social media messaging, etc.). Client device 106 may receive the BLOBs and/or URLs, and may process the received BLOBs and/or URLs to obtain and store the local device and/or access tokens in a local memory or data repository (e.g., through user intervention or programmatically). The disclosed embodiments may transmit the BLOBs and/or URLs across unencrypted out-of-band communications channels, and may thus implicitly trust the underlying transport mechanism.

Further, in certain embodiments described above, resource device 102 delegates access control decisions to computing system 108 (e.g., which maintains a cloud service, such as Google Cloud™), which relies on strong cloud-based authentication. In other aspects, and consistent with the disclosed embodiments, resource device 102 may delegate these access control decisions to a third party authority, which may store the master device and/or access tokens (e.g., as received from resource device 102), and may generate new more restricted tokens and share them through various transports using any of the exemplary processes described above. In certain aspects, the third party authentication authority may exert control over token generation, token lifetime, and scope.

A number of exemplary embodiments have been described. Nevertheless, it will be understood that various modifications may be made without departing from the scope of the disclosure. For example, various forms of the flows shown above may be used, with steps re-ordered, added, or removed.

Embodiments and all of the functional operations described in this specification may be implemented in digital electronic circuitry, or in computer software, firmware, or hardware, including the structures disclosed in this specification and their structural equivalents, or in combinations of one or more of them. Embodiments may be implemented as one or more computer program products, i.e., one or more modules of computer program instructions encoded on a computer-readable medium for execution by, or to control the operation of, data processing apparatus. The computer readable-medium may be a machine-readable storage device, a machine-readable storage substrate, a memory device, a composition of matter affecting a machine-readable propagated signal, or a combination of one or more of them. The computer-readable medium may be a non-transitory computer-readable medium. The term "data processing apparatus" encompasses all apparatus, devices, and machines for processing data, including by way of example a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

A computer program (also known as a program, software, software application, script, or code) may be written in any form of programming language, including compiled or interpreted languages, and it may be deployed in any form, including as a standalone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer may be embedded in another device, e.g., a tablet computer, a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD-ROM and DVD-ROM disks. The processor and the memory may be supplemented by, or incorporated in, special purpose logic circuitry.

To provide for interaction with a user, embodiments may be implemented on a computer having a display device, e.g., a CRT (cathode ray tube), LCD (liquid crystal display) monitor, a touchscreen display, etc., for displaying information to the user and a keyboard and a pointing device, e.g., a mouse or a trackball, by which the user may provide input to the computer. Other kinds of devices may be used to provide for interaction with a user as well; for example, feedback provided to the user may be any form of sensory feedback, e.g., visual feedback, auditory feedback, or tactile feedback; and input from the user may be received in any form, including acoustic, speech, or tactile input.

Embodiments may be implemented in a computing system that includes a back end component, e.g., as a data server, or that includes a middleware component, e.g., an application server, or that includes a front end component, e.g., a client computer having a graphical user interface or a Web browser through which a user may interact with an implementation of the techniques disclosed, or any combination of one or more such back end, middleware, or front end components. The components of the system may be interconnected by any form or medium of digital data communication, e.g., a communication network. Examples of communication networks include a local area network ("LAN") and a wide area network ("WAN"), e.g., the Internet.

The computing system may include clients and servers. A client and server are generally remote from each other and typically interact through a communication network. The relationship of client and server arises by virtue of computer programs running on the respective computers and having a client-server relationship to each other.

Further, for situations in which the systems discussed here collect personal information about users, or may make use of personal information, the users may be provided with an opportunity to control whether programs or features collect personal information, e.g., information about a user's social network, social actions or activities, profession, a user's preferences, or a user's current location, or to control whether and/or how to receive content from the content server that may be more relevant to the user. In addition, certain data may be anonymized in one or more ways before it is stored or used, so that personally identifiable information is removed. For example, a user's identity may be anonymized so that no personally identifiable information can be determined for the user, or a user's geographic location may be generalized where location information is obtained, such as to a city, zip code, or state level, so that a particular location of a user cannot be determined. Thus, the user may have control over how information is collected about him or her and used by a content server.

While this specification contains many specifics, these should not be construed as limitations, but rather as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Thus, particular embodiments have been described. Other embodiments are within the scope of the following claims. For example, the actions recited in the claims may be performed in a different order and still achieve desirable results.

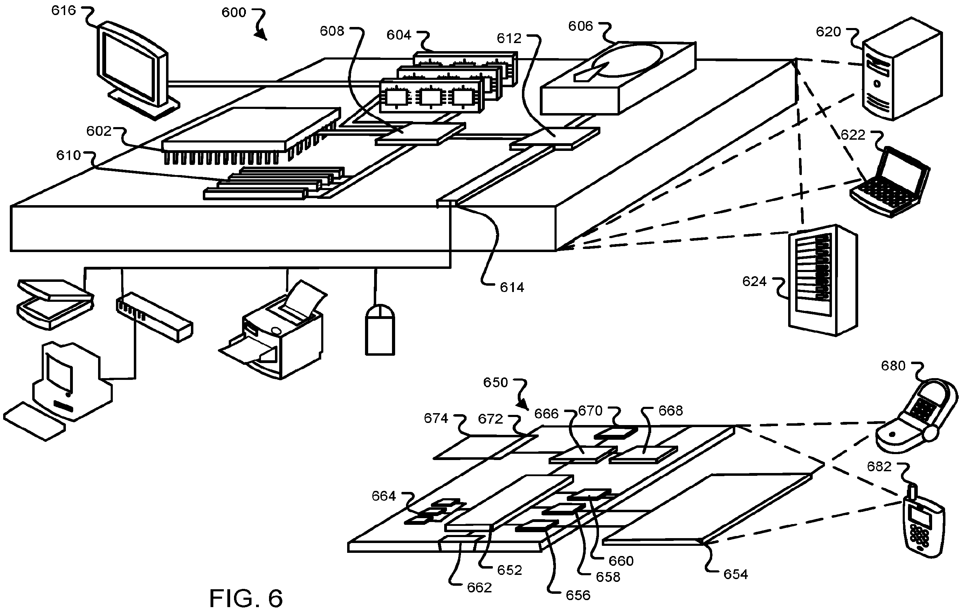

FIG. 6 is a block diagram of computing devices 600, 650 that may be used to implement the systems and methods described in this document, as either a client or as a server or plurality of servers. Computing device 600 is intended to represent various forms of digital computers, such as laptops, desktops, workstations, personal digital assistants, servers, blade servers, mainframes, and other appropriate computers. Computing device 650 is intended to represent various forms of mobile devices, such as personal digital assistants, cellular telephones, smartphones, and other similar computing devices. Additionally computing device 600 or 650 can include Universal Serial Bus (USB) flash drives. The USB flash drives may store operating systems and other applications. The USB flash drives can include input/output components, such as a wireless transmitter or USB connector that may be inserted into a USB port of another computing device. The components shown here, their connections and relationships, and their functions, are meant to be exemplary only, and are not meant to limit implementations of the inventions described and/or claimed in this document.

Computing device 600 includes a processor 602, memory 604, a storage device 606, a high-speed interface 608 connecting to memory 604 and high-speed expansion ports 610, and a low speed interface 612 connecting to low speed bus 614 and storage device 606. Each of the components 602, 604, 606, 608, 610, and 612, are interconnected using various busses, and may be mounted on a common motherboard or in other manners as appropriate. The processor 602 can process instructions for execution within the computing device 600, including instructions stored in the memory 604 or on the storage device 606 to display graphical information for a GUI on an external input/output device, such as display 616 coupled to high speed interface 608. In other implementations, multiple processors and/or multiple buses may be used, as appropriate, along with multiple memories and types of memory. Also, multiple computing devices 600 may be connected, with each device providing portions of the necessary operations (e.g., as a server bank, a group of blade servers, or a multi-processor system).

The memory 604 stores information within the computing device 600. In one implementation, the memory 604 is a volatile memory unit or units. In another implementation, the memory 604 is a non-volatile memory unit or units. The memory 604 may also be another form of computer-readable medium, such as a magnetic or optical disk.

The storage device 606 is capable of providing mass storage for the computing device 600. In one implementation, the storage device 606 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 604, the storage device 606, or memory on processor 602.

The high speed controller 608 manages bandwidth-intensive operations for the computing device 600, while the low speed controller 612 manages lower bandwidth-intensive operations. Such allocation of functions is exemplary only. In one implementation, the high-speed controller 608 is coupled to memory 604, display 616 (e.g., through a graphics processor or accelerator), and to high-speed expansion ports 610, which may accept various expansion cards (not shown). In the implementation, low-speed controller 612 is coupled to storage device 606 and low-speed expansion port 614. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 620, or multiple times in a group of such servers. It may also be implemented as part of a rack server system 624. In addition, it may be implemented in a personal computer such as a laptop computer 622. Alternatively, components from computing device 600 may be combined with other components in a mobile device (not shown), such as device 650. Each of such devices may contain one or more of computing device 600, 650, and an entire system may be made up of multiple computing devices 600, 650 communicating with each other.

Computing device 650 includes a processor 652, memory 664, an input/output device such as a display 654, a communication interface 666, and a transceiver 668, among other components. The device 650 may also be provided with a storage device, such as a microdrive or other device, to provide additional storage. Each of the components 650, 652, 664, 654, 666, and 668, are interconnected using various buses, and several of the components may be mounted on a common motherboard or in other manners as appropriate.

The processor 652 can execute instructions within the computing device 650, including instructions stored in the memory 664. The processor may be implemented as a chipset of chips that include separate and multiple analog and digital processors. Additionally, the processor may be implemented using any of a number of architectures. For example, the processor 410 may be a CISC (Complex Instruction Set Computers) processor, a RISC (Reduced Instruction Set Computer) processor, or a MISC (Minimal Instruction Set Computer) processor. The processor may provide, for example, for coordination of the other components of the device 650, such as control of user interfaces, applications run by device 650, and wireless communication by device 650.

Processor 652 may communicate with a user through control interface 658 and display interface 656 coupled to a display 654. The display 654 may be, for example, a TFT (Thin-Film-Transistor Liquid Crystal Display) display or an OLED (Organic Light Emitting Diode) display, or other appropriate display technology. The display interface 656 may comprise appropriate circuitry for driving the display 654 to present graphical and other information to a user. The control interface 658 may receive commands from a user and convert them for submission to the processor 652. In addition, an external interface 662 may be provide in communication with processor 652, so as to enable near area communication of device 650 with other devices. External interface 662 may provide, for example, for wired communication in some implementations, or for wireless communication in other implementations, and multiple interfaces may also be used.

The memory 664 stores information within the computing device 650. The memory 664 can be implemented as one or more of a computer-readable medium or media, a volatile memory unit or units, or a non-volatile memory unit or units. Expansion memory 674 may also be provided and connected to device 650 through expansion interface 672, which may include, for example, a SIMM (Single In Line Memory Module) card interface. Such expansion memory 674 may provide extra storage space for device 650, or may also store applications or other information for device 650. Specifically, expansion memory 674 may include instructions to carry out or supplement the processes described above, and may include secure information also. Thus, for example, expansion memory 674 may be provide as a security module for device 650, and may be programmed with instructions that permit secure use of device 650. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 664, expansion memory 674, or memory on processor 652 that may be received, for example, over transceiver 668 or external interface 662.

Device 650 may communicate wirelessly through communication interface 666, which may include digital signal processing circuitry where necessary. Communication interface 666 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radiofrequency transceiver 668. In addition, short-range communication may occur, such as using a Bluetooth, Wi-Fi, or other such transceiver (not shown). In addition, GPS (Global Positioning System) receiver module 670 may provide additional navigation- and location-related wireless data to device 650, which may be used as appropriate by applications running on device 650.

Device 650 may also communicate audibly using audio codec 660, which may receive spoken information from a user and convert it to usable digital information. Audio codec 660 may likewise generate audible sound for a user, such as through a speaker, e.g., in a handset of device 650. Such sound may include sound from voice telephone calls, may include recorded sound (e.g., voice messages, music files, etc.) and may also include sound generated by applications operating on device 650.

The computing device 650 may be implemented in a number of different forms, as shown in the figure. For example, it may be implemented as a cellular telephone 680. It may also be implemented as part of a smartphone 682, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), peer-to-peer networks (having ad-hoc or static members), grid computing infrastructures, and the Internet.

The computing system can include clients and servers. A client and server are generally remote from each other and typically interact through a communication network. The relationship of client and server arises by virtue of computer programs running on the respective computers and having a client-server relationship to each other.

A number of embodiments of the invention have been described. Nevertheless, it will be understood that various modifications may be made without departing from the scope of the invention. For example, various forms of the flows shown above may be used, with steps re-ordered, added, or removed. Also, although several applications of local device authentication have been described, it should be recognized that numerous other applications are contemplated. Accordingly, other embodiments are within the scope of the following claims.

## Claims

1. A computer-implemented method, comprising:
obtaining from a resource device, by one or more processors of an apparatus (108), a master access token for said resource device (102);
identifying, by the one or more processors, a user associated with a client device (106);
determining, by the one or more processors, that the user has been authorized to receive limited access to the resource device;
in response to the determination, generating, by the one or more processors, a local access token based on the master access token, the local access token being configured to grant access to the client device for accessing the resource device without requiring the resource device to have network connectivity to validate the local access token;
providing, by the one or more processors, the local access token for accessing the resource device to the client device.

2. The method of claim 1, wherein the determining comprises determining that the user has been authorized to receive the limited access to the resource device (102) by at least one of an owner of the resource device or an entity capable of controlling access to the resource device.

3. The method of claim 1 or claim 2, wherein the identifying comprises:
receiving, from the client device (106), a request (205) to obtain the limited access to the resource device (102), the request comprising at least one of an identifier of the user or an identifier of the client device; and
in response to the request, providing the local access token for the resource device to the client device.

4. The method of claim 3, wherein:
the method further comprises:
identifying the client device (106) based on at least a portion of the received request (205); and
determining that the client device has been authorized to receive the limited access to the resource device (102); and
the generating comprises generating the local access token in response to the determination that the client device has been authorized to receive the limited access.

5. The method of claim 1, further comprising obtaining an access control list for the resource device (102), the access control list identifying one or more users authorized to receive corresponding limited accesses to the resource device,
and wherein the apparatus may be configured to store the access control list in local memory.

6. The method of claim 5, wherein the determining comprises:
determining, based on the access control list, that the one or more authorized users include the user associated with the client device (106); and
in response to the determination that the one or more authorized users include the user, establish that the user of the client device has been authorized to receive the limited access.

7. The method of any of claims 5-6, further comprising:
receiving access control data from an owner device (104), the owner device being associated with an owner of the resource device (102), the access control data authorizing the user to receive the limited access to the resource device; and
modifying at least a portion of the access control list to identify the user of the client device (106) as an authorized user,
wherein:
the access control data comprises access parameters, the access parameters establishing a scope of the limited access granted to the user; and
the method further comprises modifying at least a portion of the access control list to include the access parameters, and
wherein the access parameters may comprise at least one of a role assigned to the user, a temporal restriction, a restriction on an access type, a restriction on offline access, or a restriction on an ability of the client device to generate tokens.

8. The method of claim 5, wherein the access control list identifies one or more access parameters associated with the user, the access parameters comprising at least one of a role assigned to the user, a temporal restriction, a restriction on an access type, a restriction on offline access, or a restriction on an ability of the client device to generate tokens.

9. The method of claim 8, wherein:
local access token comprises a digital certificate; or
the local access token comprises a macaroon, the macaroon comprising one or more caveats and a corresponding key; and
the generating comprises:
based on the access control list, identifying the access parameters associated with the user;
establishing an expiration time for the local access token; and performing operations that incorporate the expiration time and the identified access parameters within the one or more caveats of the local access token
wherein the method may further comprise modifying at least a portion of the access control list to incorporate the expiration time established for the local access token of the user.

10. The method of any of claims 1-6, wherein:
the local access token comprises data identifying the user associated with the client device (106); and
the generating comprises applying a digital signature to the local access token,
wherein:
the local access token may comprise a macaroon, the macaroon comprising one or more caveats and a corresponding key;
the corresponding key comprises the applied digital signature; and the generating further comprises generating the digital signature based on an application of a MAC algorithm to at least a portion of the one or more caveats,
wherein the one or more caveats may comprise at least one of an expiration date of the token, a role assigned to the user, or the data identifying the at least one of the user or the client device.

11. The method of any of claims 1-6, wherein:
the obtaining comprises receiving the master access token from the resource device (102); and the generating comprises generating the local access token based on at least a portion of the received master access token.

12. The method of claim 11, wherein:
the master access token comprises a first macaroon, the first macaroon comprising one or more first caveats and a corresponding first key; and the local access token comprises a second macaroon, the second macaroon comprising one or more second caveats and a corresponding second key wherein generating the local access token may comprise generating the one or more second caveats, wherein:
a first portion of the second caveats comprise the first caveats; and
a second portion of the second caveats comprise an expiration date of the local access token, and one or more access parameters associated with the limited access of the user, the access parameters comprising at least one of a role assigned to the user, a temporal restriction, a restriction on an access type, a restriction on offline access, or a restriction on an ability of the client device to generate tokens.

13. The method of claim 1, further comprising:
receiving, from the resource device (102), a master device token, the master device token enabling the client device (106) to verify an identity of the resource device;
in response to the determination, generating a local device token based on at least a portion of the master device token; and
providing the local device token to the client device.

14. An apparatus (108), comprising:
at least one processor; and
a memory storing executable instructions that, when executed by the at least one processor, causes the at least one processor to perform the steps of any one of the preceding claims.

15. A computer program which, when executed by at least one processor of an apparatus, performs a method according to any one of claims 1 to 13.

## Patentansprüche

1. Computerimplementiertes Verfahren, umfassend:
Erhalten von einem Ressourcengerät, durch einen oder mehrere Prozessoren einer Vorrichtung (108), eines Master-Zugriffstokens für das Ressourcengerät (102);
Identifizieren, durch den einen oder die mehreren Prozessoren, eines einem Client-Gerät (106) zugeordneten Benutzers;
Bestimmen, durch den einen oder die mehreren Prozessoren, dass der Benutzer autorisiert wurde, beschränkten Zugriff auf das Ressourcengerät zu erhalten;
in Reaktion auf die Bestimmung, Erzeugen, durch den einen oder die mehreren Prozessoren, eines auf dem Master-Zugriffstoken basierenden lokalen Zugriffstokens, wobei das lokale Zugriffstoken konfiguriert ist, dem Client-Gerät Zugriff für das Zugreifen auf das Ressourcengerät zu gewähren, ohne dass eine Netzwerkverbindung des Ressourcengerätes zum Validieren des lokalen Zugriffstokens erforderlich ist;
Bereitstellen, durch den einen oder die mehreren Prozessoren, des lokalen Zugriffstokens für das Zugreifen auf das Ressourcengerät an das Client-Gerät.

2. Verfahren nach Anspruch 1, wobei das Bestimmen Bestimmen umfasst, dass der Benutzer mindestens entweder von einem Besitzer des Ressourcengeräts (102) oder einer zur Zugriffskontrolle des Ressourcengeräts befähigten Instanz autorisiert wurde, beschränkten Zugriff auf das Ressourcengerät zu erhalten.

3. Verfahren nach Anspruch 1 oder Anspruch 2, wobei das Identifizieren Folgendes umfasst:
Empfangen einer Anfrage (205) von dem Client-Gerät (106), beschränkten Zugriff auf das Ressourcengerät (102) zu erhalten, wobei die Anfrage mindestens eine Kennung des Benutzers oder eine Kennung des Client-Gerätes umfasst; und
in Reaktion auf die Anfrage, Bereitstellen des lokalen Zugriffstokens für das Ressourcengerät dem Client-Gerät.

4. Verfahren nach Anspruch 3, wobei:
das Verfahren ferner umfasst:
Identifizieren des Client-Geräts (106) basierend auf mindestens einem Teil der empfangenen Anfrage (205); und
Bestimmen, dass das Client-Gerät autorisiert wurde, den beschränkten Zugriff auf das Ressourcengerät (102) zu erhalten; und
das Erzeugen Erzeugen des lokalen Zugriffstokens in Reaktion auf die Bestimmung umfasst, dass das Client-Gerät autorisiert wurde, beschränkten Zugriff zu erhalten.

5. Verfahren nach Anspruch 1, des Weiteren umfassend Erhalten einer Zugriffskontrollliste für das Ressourcengerät (102), wobei die Zugriffskontrollliste einen oder mehrere Benutzer identifiziert, die autorisiert sind, entsprechende beschränkte Zugriffe auf das Ressourcengerät zu erhalten,
und wobei die Vorrichtung konfiguriert werden kann, um die Zugriffskontrollliste in einem lokalen Speicher zu speichern.

6. Verfahren nach Anspruch 5, wobei das Bestimmen umfasst:
Bestimmen, basierend auf der Zugriffskontrollliste, dass der eine oder die mehreren autorisierten Benutzer den dem Client-Gerät (106) zugeordneten Benutzer beinhalten; und
Festlegen, in Reaktion auf die Bestimmung, dass der eine oder die mehreren autorisierten Benutzer den Benutzer beinhalten, dass der Benutzer des Client-Geräts autorisiert wurde, beschränkten Zugriff zu erhalten.

7. Verfahren nach einem beliebigen der Ansprüche 5 bis 6, ferner umfassend:
Empfangen von Zugriffskontrolldaten von einem Besitzergerät (104), wobei das Besitzergerät einem Besitzer des Ressourcengeräts (102) zugeordnet ist und die Zugriffskontrolldaten den Benutzer autorisieren, den beschränkten Zugriff auf das Ressourcengerät zu erhalten; und
Modifizieren von mindestens einem Teil der Zugriffskontrollliste, um den Benutzer des Client-Geräts (106) als autorisierten Benutzer zu identifizieren,
wobei:
die Zugriffskontrolldaten Zugriffskontrollparameter umfassen, und die Zugriffsparameter einen Umfang des dem Benutzer gewährten beschränkten Zugriffs festlegen; und
das Verfahren des Weiteren Modifizieren von mindestens einem Teil der Zugriffskontrollliste umfasst, um die Zugriffsparameter einzubeziehen, und
wobei die Zugriffsparameter mindestens, alternativ oder kumulativ, eine dem Benutzer zugewiesene Rolle, eine zeitliche Beschränkung, eine Beschränkung einer Zugriffsart, eine Beschränkung des Offline-Zugriffs oder eine Beschränkung der Fähigkeit des Client-Gerätes zur Erzeugung von Tokens umfassen können.

8. Verfahren nach Anspruch 5, wobei die Zugriffskontrollliste mindestens einen oder mehrere dem Benutzer zugeordnete Zugriffsparameter identifiziert, und die Zugriffsparameter mindestens, alternativ oder kumulativ, eine dem Benutzer zugewiesene Rolle, eine zeitliche Restriktion, eine Restriktion einer Zugriffsart, eine Restriktion des Offline-Zugriffs oder eine Restriktion der Fähigkeit des Client-Gerätes zur Erzeugung von Tokens umfassen.

9. Verfahren nach Anspruch 8, wobei:
das lokale Zugriffstoken ein digitales Zertifikat umfasst; oder
das lokale Zugriffstoken ein Macaroon umfasst, und das Macaroon einen oder mehrere Schutzvorbehalte und einen entsprechenden Schlüssel umfasst; und
das Erzeugen umfasst:
Identifizieren, basierend auf der Zugriffskontrollliste, der dem Benutzer zugeordneten Zugriffsparameter;
Festlegen eines Ablaufzeitpunktes für das lokale Zugriffstoken; und Durchführen von Vorgängen, die den Ablaufzeitpunkt und die identifizierten Zugriffsparameter in den einen oder die mehreren Schutzvorbehalte des lokalen Zugriffstokens einbeziehen,
wobei das Verfahren des Weiteren Modifizieren von mindestens einem Teil der Zugriffskontrollliste zum Einbeziehen des für das lokale Zugriffstoken des Benutzers festgelegten Ablaufzeitpunktes umfassen kann.

10. Verfahren nach einem beliebigen der Ansprüche 1 bis 6, wobei:
das lokale Zugriffstoken Daten zum Identifizieren des dem Client-Gerät (106) zugeordneten Benutzers umfasst; und
das Erzeugen Anwenden einer digitalen Signatur auf das lokale Zugriffstoken umfasst, wobei:
das lokale Zugriffstoken ein Macaroon umfassen kann, wobei das Macaroon einen oder mehrere Schutzvorbehalte und einen entsprechenden Schlüssel umfasst;
der entsprechende Schlüssel die angewandte digitale Signatur umfasst; und das Erzeugen des Weiteren Erzeugen der digitalen Signatur, basierend auf einer Anwendung eines MAC-Algorithmus auf mindestens einen Teil des einen oder der mehreren Schutzvorbehalte, umfasst,
wobei der eine oder die mehreren Schutzvorbehalte mindestens, alternativ oder kumulativ, ein Ablaufdatum des Tokens, eine dem Benutzer zugewiesene Rolle oder die Daten zum Identifizieren mindestens des Benutzers oder des Client-Gerätes umfassen kann.

11. Verfahren nach einem beliebigen der Ansprüche 1 bis 6, wobei:
das Erhalten Empfangen des Master-Zugriffstokens von dem Ressourcengerät (102) umfasst; und das Erzeugen Erzeugen des lokalen Zugriffstokens basierend auf mindestens einem Teil des empfangenen Master-Zugriffstokens umfasst.

12. Verfahren nach Anspruch 11, wobei:
das Master-Zugriffstoken ein erstes Macaroon umfasst, wobei das erste Macaroon einen oder mehrere erste Schutzvorbehalte und einen entsprechenden ersten Schlüssel umfasst; und das lokale Zugriffstoken ein zweites Macaroon umfasst, wobei das zweite Macaroon einen oder mehrere zweite Schutzvorbehalte und einen entsprechenden zweiten Schlüssel umfasst, wobei das Erzeugen des lokalen Zugriffstokens das Erzeugen des einen oder der mehreren zweiten Schutzvorbehalte umfassen kann, wobei:
ein erster Teil der zweiten Schutzvorbehalte die ersten Schutzvorbehalte umfasst; und
ein zweiter Teil der zweiten Schutzvorbehalte ein Ablaufdatum des lokalen Zugriffstokens, und einen oder mehrere dem beschränkten Zugriff des Benutzers zugeordnete Zugriffsparameter umfassen, wobei die Zugriffsparemeter mindestens, alternativ oder kumulativ, eine dem Benutzer zugewiesene Rolle, eine zeitliche Beschränkung, eine Beschränkung einer Zugriffsart, eine Beschränkung des Offline-Zugriffs oder eine Beschränkung der Fähigkeit des Client-Gerätes zur Erzeugung von Tokens umfassen.

13. Verfahren nach Anspruch 1, ferner umfassend:
Empfangen eines Master-Gerätetokens von dem Ressourcengerät (102), wobei das Master-Gerätetoken das Client-Gerät (106) befähigt, die Identität des Ressourcengeräts zu verifizieren;
Erzeugen, in Reaktion auf die Bestimmung Bestimmen, eines lokalen Gerätetokens, basierend auf mindestens einem Teil des Master-Gerätetokens; und
Bereitstellen des lokalen Gerätetokens dem Client-Gerät.

14. Vorrichtung (108), umfassend:
mindestens einen Prozessor; und
einen Speicher, der ausführbare Anweisungen speichert, die bei Ausführung durch den mindestens einen Prozessor den mindestens einen Prozessor zur Durchführung der Schritte eines beliebigen der vorangehenden Ansprüche veranlassen.

15. Computerprogramm, das, bei Ausführung durch mindestens einen Prozessor einer Vorrichtung ein Verfahren nach einem der Ansprüche 1 bis 13 durchführt.

## Revendications

1. Procédé mis en œuvre par ordinateur, comprenant :
l'obtention à partir d'un dispositif de ressources, par un ou plusieurs processeurs d'un appareil (108), d'un jeton d'accès maître pour ledit dispositif de ressources (102) ;
l'identification, par le ou les processeurs, d'un utilisateur associé à un dispositif client(106) ;
la détermination, par le ou les processeurs, que l'utilisateur a été autorisé à recevoir un accès limité au dispositif de ressources ; en réponse à la détermination, la génération, par le ou les processeurs, d'un jeton d'accès local sur base du jeton d'accès maître, le jeton d'accès local étant configuré pour accorder un accès au dispositif client pour l'accès au dispositif de ressources sans l'exigence que le dispositif de ressources dispose d'une connectivité réseau pour valider le jeton d'accès local ;
la fourniture, par le ou les processeurs, du jeton d'accès local pour l'accès au dispositif de ressources au dispositif client.

2. Procédé selon la revendication 1, dans lequel la détermination comprend la détermination que l'utilisateur a été autorisé à recevoir l'accès limité au dispositif de ressources (102) par au moins un d'un propriétaire du dispositif de ressources ou d'une entité capable du contrôle de l'accès au dispositif de ressources.

3. Procédé selon la revendication 1 ou la revendication 2, dans lequel l'identification comprend :
la réception, à partir du dispositif client (106), d'une demande (205) pour obtenir l'accès limité au dispositif de ressources (102), la demande comprenant au moins un identifiant de l'utilisateur ou un identifiant du dispositif client ; et
en réponse à la demande, la fourniture du jeton d'accès local pour le dispositif de ressources au dispositif client.

4. Procédé selon la revendication 3, dans lequel :
le procédé comprend en outre :
l'identification du dispositif client (106) sur base d'au moins une partie de la demande reçue (205) ; et
la détermination que le dispositif client a été autorisé à recevoir l'accès limité au dispositif de ressources (102) ; et
la génération comprend la génération du jeton d'accès local en réponse à la détermination que le dispositif client a été autorisé à recevoir l'accès limité.

5. Procédé selon la revendication 1, comprenant en outre l'obtention d'une liste de contrôle d'accès pour le dispositif de ressources (102), la liste de contrôle d'accès identifiant un ou plusieurs utilisateurs autorisés à recevoir des accès limités correspondants au dispositif de ressources,
et dans lequel l'appareil peut être configuré pour stocker la liste de contrôle d'accès dans une mémoire locale.

6. Procédé selon la revendication 5, dans lequel la détermination comprend :
la détermination, sur base de la liste de contrôle d'accès, que le ou les utilisateurs autorisés comprennent l'utilisateur associé au dispositif client (106) ; et
en réponse à la détermination que le ou les utilisateurs autorisés comprennent l'utilisateur, établir que l'utilisateur du dispositif client a été autorisé à recevoir l'accès limité.

7. Procédé selon l'une quelconque des revendications 5-6, comprenant en outre :
la réception de données de contrôle d'accès à partir d'un dispositif propriétaire (104), le dispositif propriétaire étant associé à un propriétaire du dispositif de ressources (102), les données de contrôle d'accès autorisant l'utilisateur à recevoir l'accès limité au dispositif de ressources ; et
la modification d'au moins une partie de la liste de contrôle d'accès pour identifier l'utilisateur du dispositif client (106) en tant qu'utilisateur autorisé,
dans lequel :
les données de contrôle d'accès comprennent des paramètres d'accès, les paramètres d'accès établissant une portée de l'accès limité accordé à l'utilisateur ; et
le procédé comprend en outre la modification d'au moins une partie de la liste de contrôle d'accès pour inclure les paramètres d'accès, et
dans lequel les paramètres d'accès peuvent comprendre au moins un d'un rôle attribué à l'utilisateur, d'une restriction temporelle, d'une restriction sur un type d'accès, d'une restriction sur un accès hors ligne, ou d'une restriction sur une capacité du dispositif client de générer des jetons.

8. Procédé selon la revendication 5, dans lequel la liste de contrôle d'accès identifie un ou plusieurs paramètres d'accès associés à l'utilisateur, les paramètres d'accès comprenant au moins un d'un rôle attribué à l'utilisateur, d'une restriction temporelle, d'une restriction sur un type d'accès, d'une restriction sur un accès hors ligne, ou d'une restriction sur une capacité du dispositif client de générer des jetons.

9. Procédé selon la revendication 8, dans lequel :
le jeton d'accès local comprend un certificat numérique ; ou
le jeton d'accès local comprend un macaron, le macaron comprenant une ou plusieurs oppositions et une clé correspondante; et
la génération comprend :
sur base de la liste de contrôle d'accès, l'identification des paramètres d'accès associés à l'utilisateur ;
l'établissement d'une heure d'expiration pour le jeton d'accès local ; et l'exécution d'opérations qui incorporent l'heure d'expiration et les paramètres d'accès identifiés dans la ou les oppositions du jeton d'accès local
dans lequel le procédé peut en outre comprendre la modification d'au moins une partie de la liste de contrôle d'accès pour incorporer l'heure d'expiration établie pour le jeton d'accès local de l'utilisateur.

10. Procédé selon l'une quelconque des revendications 1-6, dans lequel :
le jeton d'accès local comprend des données d'identification de l'utilisateur associé au dispositif client (106) ; et
la génération comprend l'application d'une signature numérique au jeton d'accès local, dans lequel :
le jeton d'accès local peut comprendre un macaron, le macaron comprenant une ou plusieurs oppositions et une clé correspondante;
la clé correspondante comprend la signature numérique appliquée ; et la génération comprend en outre la génération de la signature numérique sur base d'une application d'un algorithme MAC à au moins une partie de l'opposition ou des oppositions,
dans lequel le ou les oppositions peuvent comprendre au moins une d'une date d'expiration du jeton, d'un rôle attribué à l'utilisateur, ou des données d'identification de l'au moins un de l'utilisateur ou du dispositif client.

11. Procédé selon l'une quelconque des revendications 1-6, dans lequel :
l'obtention comprend la réception du jeton d'accès maître à partir du dispositif de ressources (102) ; et la génération comprend la génération du jeton d'accès local sur base d'au moins une partie du jeton d'accès maître reçu.

12. Procédé selon la revendication 11, dans lequel :
le jeton d'accès maître comprend un premier macaron, le premier macaron comprenant une ou plusieurs premières oppositions et une première clé correspondante ; et le jeton d'accès local comprend un deuxième macaron, le deuxième macaron comprenant une ou plusieurs deuxième oppositions et une deuxième clé correspondante, dans lequel la génération du jeton d'accès local peut comprendre la génération de la ou des deuxièmes oppositions, dans lequel :
une première partie des deuxièmes oppositions comprend les premières oppositions ; et
une deuxième partie des deuxièmes oppositions comprend une date d'expiration du jeton d'accès local, et un ou plusieurs paramètres d'accès associés à l'accès limité de l'utilisateur, les paramètres d'accès comprenant au moins un d'un rôle attribué à l'utilisateur, d'une restriction temporelle, d'une restriction sur un type d'accès, d'une restriction sur un accès hors ligne, ou d'une restriction sur une capacité du dispositif client à générer des jetons.

13. Procédé selon la revendication 1, comprenant en outre :
la réception, à partir du dispositif de ressources (102), d'un jeton de dispositif maître, le jeton de dispositif maître permettant au dispositif client (106) de vérifier une identité du dispositif de ressources ;
en réponse à la détermination, la génération d'un jeton de dispositif local sur base d'au moins une partie du jeton de dispositif maître ; et
la fourniture du jeton de dispositif local au dispositif client.

14. Appareil (108), comprenant :
au moins un processeur ; et
des instructions de stockage de mémoire qui, lorsqu'elles sont exécutées par l'au moins un processeur, amènent l'au moins un processeur à exécuter les étapes selon l'une quelconque des revendications précédentes.

15. Programme informatique, qui, lorsqu'il est exécuté par au moins un processeur d'un appareil, exécute le procédé selon l'une quelconque des revendications 1 à 13.
